(19) Europäisches Patentamt
European Patent Office
Office européen des brevets

(11) **EP 4 750 009 A1**

(12) **EUROPEAN PATENT APPLICATION**
published in accordance with Art. 153(4) EPC

(43) Date of publication:
**27.05.2026 Bulletin 2026/22**

(21) Application number: **24844187.5**

(22) Date of filing: **29.01.2024**

(51) International Patent Classification (IPC):
**H04L 27/12** (2006.01)    **H04L 27/26** (2006.01)
**H04L 1/00** (2006.01)

(52) Cooperative Patent Classification (CPC):
**H04L 1/00; H04L 27/12; H04L 27/26**

(86) International application number:
**PCT/CN2024/074456**

(87) International publication number:
**WO 2025/020488 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.07.2023 RU 2023119505**

(71) Applicant: HUAWEI TECHNOLOGIES CO., LTD.
**Shenzhen 518129 (CN)**

(72) Inventors:
• HU, Yuanzhou
  Shenzhen, Guangdong 518129 (CN)
• WANG, Fan
  Shenzhen, Guangdong 518129 (CN)
• MA, Jianglei
  Shenzhen, Guangdong 518129 (CN)

(74) Representative: **Maiwald GmbH**
**Engineering**
**Elisenhof**
**Elisenstrasse 3**
**80335 München (DE)**

(54) **COMMUNICATION METHOD AND COMMUNICATION APPARATUS**

(57)    A communication method includes: determining K codewords (S310), generating a first symbol based on the K codewords and K clusters of modulation data (S320), and sending the first symbol (S330). The K codewords one to one correspond to K codebooks, positions of non-zero coefficients included in the K codewords are related, the K codewords one to one correspond to the K clusters of modulation data, and K is an integer greater than 1. According to the method, a peak-to-average power ratio of the first symbol can be reduced, and transmission interference between users can be reduced, thereby improving demodulation performance.

300

```
Sending device                          Receiving device

S310: Determine K codewords

S320: Generate a first symbol
based on the K codewords and K
clusters of modulation data

              S330: First symbol
        ──────────────────────────────►

                          S340: Determine the K codewords

                          S350: Determine the K clusters of
                          modulation data based on the first
                          symbol and the K codewords
```

FIG. 3

## Description

This application claims priority to Russian Patent Application No. 2023119505, filed with the Federal Service for Intellectual Property on July 25, 2023 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

In a grant-free (grant-free) system, a plurality of terminal devices select a part of a segment of shared time-frequency resources to send data. Time-frequency resources selected by different terminals may completely or partially overlap, causing interference in a data transmission process, and affecting data demodulation performance of a base station. Particularly, in a large-scale access scenario, there are a large quantity of access devices (terminal devices), and a probability that time-frequency resources selected by different terminal devices overlap is higher. Consequently, transmission interference between the terminal devices increases.

For example, a long term evolution (long term evolution, LTE) system supports generation of a single-carrier frequency-division multiple access (single-carrier frequency-division multiple access, SC-FDMA) symbol of dual-cluster data, and a peak-to-average power ratio (peak-to-average power ratio, PAPR) of the SC-FDMA symbol is slightly higher than that of a conventional SC-FDMA symbol, which may affect system demodulation performance.

## SUMMARY

Embodiments of this application provide a communication method and a communication apparatus. A first symbol with a low PAPR is generated, to reduce transmission interference between users and improve demodulation performance.

According to a first aspect, a communication method is provided. The method may be performed by a sending device, or may be performed by a chip or a circuit used in the sending device. This is not limited in this application. For ease of description, the following uses an example in which the method is performed by the sending device for description.

The method includes: determining K codewords, where positions of non-zero coefficients included in the K codewords are related, and K is an integer greater than 1; generating a first symbol based on the K codewords and K clusters of modulation data, where the K codewords one to one correspond to the K clusters of modulation data; and sending the first symbol.

It should be understood that embodiments of this application are applicable to any communication scenario in which a transmit-end device communicates with a receive-end device. In other words, embodiments of this application are applicable to an uplink communication scenario, a downlink communication scenario, a relay link communication scenario, or a sidelink communication scenario. For example, uplink communication is communication between a terminal device and a network device, downlink communication is communication between the network device and the terminal device, and sidelink communication is communication between terminal devices. Therefore, the sending device may be the network device or the terminal device, and a receiving device may also be the network device or the terminal device. This is not limited in this application.

For example, the first symbol may be an SC-FDMA symbol.

For example, that the K codewords one to one correspond to the K clusters of modulation data may be understood as that each cluster of modulation data corresponds to one codeword, and codewords corresponding to all of the clusters of modulation data are different from each other. In other words, each of the K clusters of modulation data is mapped to a resource corresponding to any one of the K codewords, and codewords to which all of the clusters of modulation data are mapped are different from each other.

For example, that the positions of the non-zero coefficients included in the K codewords are related may be described as that the non-zero coefficients included in the K codewords are complementary. In embodiments of this application, that the positions of the non-zero coefficients included in the K codewords are related includes: Positions of all non-zero coefficients included in the K codewords are related, or positions of some non-zero coefficients included in the K codewords are related. Similarly, that the non-zero coefficients included in the K codewords are complementary includes: All non-zero coefficients included in the K codewords are complementary, or some non-zero coefficients included in the K codewords are complementary. In other words, time-frequency resources corresponding to the positions of the non-zero coefficients included in the K codewords are completely different or partially different.

According to the solution provided in this application, the first symbol with a low PAPR is generated based on the K codewords and the K clusters of modulation data. The positions of the non-zero coefficients included in the K codewords are related, so that K codewords corresponding to K clusters of modulation data of different sending devices may be different. Therefore, a possibility that a conflict occurs when a plurality of sending devices simultaneously transmit signals can be reduced, and demodulation performance of a receiving device can also be improved.

With reference to the first aspect, in some implementations of the first aspect, the K codewords one to one correspond to K codebooks, each of the K codebooks includes N codewords, quantities of elements included in all of the N codewords are the same, and N is an integer greater than 1.

In other words, the K clusters of modulation data one to one correspond to the K codebooks.

For example, that the K codewords one to one correspond to the K codebooks may be understood as that each codeword corresponds to one codebook, and codebooks corresponding to all of the codewords are different from each other.

Considering that the K codewords one to one correspond to the K codebooks, and the K codewords one to one correspond to the K clusters of modulation data, it can be learned that that the K clusters of modulation data one to one correspond to the K codebooks may be understood as that each cluster of modulation data corresponds to one codebook, and codebooks corresponding to all of the clusters of modulation data are different from each other. In other words, the K codebooks, the K codewords, and the K clusters of modulation data are in one-to-one correspondence.

Optionally, the K codebooks may be predefined, configured, or preconfigured, or indicated by signaling. For example, if the K codebooks are configured before delivery of the sending device, no signaling indication is needed. For another example, a base station delivers configuration information to the sending device, to indicate the K codebooks, where the configuration information includes a quantity of the K codebooks, a length of each codeword, a value of an element included in each codebook, and the like.

With reference to the first aspect, in some implementations of the first aspect, the determining the K codewords includes: determining the K codewords from the K codebooks.

With reference to the first aspect, in some implementations of the first aspect, the determining the K codewords from the K codebooks includes: determining a first codeword index, where the first codeword index is one of N codeword indexes, and the N codeword indexes one to one correspond to the N codewords included in each codebook; and determining the K codewords from the K codebooks based on the first codeword index.

For example, the first codeword index may be predefined, configured, or preconfigured, or indicated by signaling. For example, when codebook hopping or codeword hopping is not enabled, the K codebooks or the first codeword index determined by the sending device remains unchanged. When codebook hopping or codeword hopping is enabled, the K codebooks determined by the sending device are initially configured codebooks or the first codeword index determined by the sending device is an initially configured codeword index, and a new codebook or codeword index is recalculated in next codebook hopping or codeword hopping (a next symbol/slot).

For example, the sending device may determine the first codeword index based on a pseudo-random sequence, and initialization of the pseudo-random sequence is determined based on an identifier of the sending device. Optionally, the pseudo-random sequence may be a Gold sequence or an m sequence.

Based on this implementation, the sending device determines the first codeword index, and can determine a corresponding codeword from each of the K codebooks based on the first codeword index, that is, obtain the K codewords.

With reference to the first aspect, in some implementations of the first aspect, an $i^{th}$ codebook $S_i$ in the K codebooks satisfies:

$$S_i = \left\{ S_i^0, \ldots, S_i^{N-1} \right\},$$

where $S_i^j$ represents a $j^{th}$ codeword in the $i^{th}$ codebook, $S_i^j = \left[ S_i^j(0), \ldots, S_i^j(L-1) \right]$, $L$ represents a quantity of elements included in the $j^{th}$ codeword, a value of at least one element in the $L$ elements included in $S_i^j$ is 0, $S_i^j(m)$ represents an $m^{th}$ element in the $j^{th}$ codeword, m = 0, ..., L - 1, i and j are integers, $i$ = 0, ..., K - 1, and $j$ = 0, ..., N - 1.

For example, a value of an element in each codeword in each codebook is 0 or 1, or a value of an element in each codeword in each codebook is 0, 1, or -1.

With reference to the first aspect, in some implementations of the first aspect, that the positions of the non-zero coefficients included in the K codewords are related includes: When $L_{nonzero} \leq L$, positions of any two non-zero coefficients in positions of $L_{nonzero}$ non-zero coefficients are different; or when $L_{nonzero} > L$, $L_{nonzero}$ non-zero coefficients include $L$ non-zero coefficients, and positions of any two non-zero coefficients in positions of the $L$ non-zero coefficients are different. $L_{nonzero}$ represents a sum of quantities of elements of the non-zero coefficients included in the K codewords that are determined from the K codebooks based on the first codeword index, the first codeword index is one of the N codeword indexes, the N codeword indexes one to one correspond to the N codewords included in each codebook, and *L* represents a quantity of elements included in any one of the K codewords.

Optionally, a quantity $L_{nonzero}$ of all non-zero coefficients may be related to a codeword index j corresponding to a $j^{th}$ codeword in a codebook. In this case, a quantity of all non-zero coefficients of K codewords that are determined from the K codebooks based on the codeword index *j* may be represented as $L_{nonzero}^{j}$ .

With reference to the first aspect, in some implementations of the first aspect, when $L_{nonzero}^{j} \leq L$ , positions of any two non-zero coefficients in the $L_{nonzero}^{j}$ non-zero coefficients are different; or when $L_{nonzero}^{j} > L$ , the $L_{nonzero}^{j}$ non-zero coefficients include *L* non-zero coefficients, and positions (namely, positions in *L* elements in a codeword) of any two non-zero coefficients in positions of the *L* non-zero coefficients are different.

Based on this implementation, when $L_{nonzero}^{j} \leq L$ , because the K codebooks are complementary, the K clusters of modulation data are extended based on the K codebooks to determine K clusters of first data, and SC-FDMA symbols are generated based on the K clusters of first data. SC-FDMA symbols corresponding to different clusters of first data are complementary and superposed. In other words, energy of an SC-FDMA symbol corresponding to another cluster of first data at a position at which energy of an SC-FDMA symbol corresponding to a cluster of first data is large is small. Therefore, a PAPR of a superposed SC-FDMA symbol is low, and energy of the sending device for sending data can be improved, thereby improving demodulation performance. In addition, K codewords corresponding to K clusters of modulation data of different sending devices may be different, so that demodulation performance can be improved while transmission interference between users is reduced. When $L_{nonzero}^{j} > L$ , because the K codebooks are not complementary, but positions of some non-zero elements in the $L_{nonzero}$ non-zero coefficients are different, it may be understood as that the K codebooks are partially complementary. In comparison with the case in which $L_{nonzero}^{j} \leq L$ , in the partially complementary K codebooks, there is more flexibility, a larger quantity of codewords can be designed, and a scenario in which more sending devices simultaneously transmit data, especially a large-scale access scenario, is supported.

It should be understood that when $L_{nonzero} = L$, a quantity of all non-zero coefficients of K codewords that are determined from the K codebooks based on a same codeword index is a length *L* of a codeword. In this case, positions of any two non-zero coefficients in the *L* non-zero coefficients are different. Therefore, it may be understood that 0 to *L* - 1 are exactly traversed for the positions of the *L* non-zero coefficients. In addition, when all possible codeword indexes are traversed, 0 to *L* - 1 are exactly traversed for the positions of the *L* non-zero coefficients. Therefore, positions of all non-zero coefficients of the K codewords that are determined from the K codebooks based on a same codeword index may be referred to as being complementary, or the K codebooks being complementary codebooks.

It should be understood that, for all the $L_{nonzero}$ non-zero coefficients included in the K codewords, any non-zero coefficient corresponds to one of the K codewords, and one codeword includes one or more non-zero coefficients. In other words, a position of any non-zero coefficient in positions of all the non-zero coefficients included in the K codewords is a position of the non-zero coefficient in a corresponding codeword.

With reference to the first aspect, in some implementations of the first aspect, the first symbol is obtained by combining K first sub-symbols, and the K first sub-symbols are generated based on K clusters of first data.

With reference to the first aspect, in some implementations of the first aspect, a length of a $k^{th}$ cluster of modulation data in the K clusters of modulation data is related to a quantity of non-zero coefficients included in a codeword corresponding to the $k^{th}$ cluster of modulation data, and k= 0, ..., K - 1.

Optionally, a length or a size of the $k^{th}$ cluster of modulation data in the K clusters of modulation data is related to a $k^{th}$ codeword used by the $k^{th}$ cluster of modulation data, for example, is related to a quantity of non-zero coefficients included in the used $k^{th}$ codeword.

Based on this implementation, because each cluster of modulation data corresponds to one codeword, a size or a length of each cluster of modulation data adapts to a quantity of non-zero coefficients included in one codeword corresponding to the cluster of modulation data, thereby facilitating data transmission performance of the sending device.

With reference to the first aspect, in some implementations of the first aspect, the K clusters of modulation data are obtained by splitting first modulation data, and the first modulation data is obtained through modulation of bit data.

For example, a modulation scheme includes any one of the following: binary phase shift keying (binary phase shift keying, BPSK) modulation, Pi/2-BPSK modulation, or quadrature phase shift keying (quadrature phase shift keying, QPSK) modulation. This is not limited in this application.

With reference to the first aspect, in some implementations of the first aspect, the generating the first symbol based on the K codewords and the K clusters of modulation data includes: extending the K clusters of modulation data based on the K codewords, to obtain the K clusters of first data; and generating the first symbol based on the K clusters of first data.

With reference to the first aspect, in some implementations of the first aspect, the extending the K clusters of modulation data based on the K codewords, to obtain the K clusters of first data includes: extending the $k^{th}$ cluster of modulation data based on a $(j_{cw,1})^{th}$ codeword in a $k^{th}$ codebook, to obtain a $k^{th}$ cluster of first data, where $j_{cw,1}$ is the first codeword index, the first codeword index is one of the N codeword indexes, the N codeword indexes one to one correspond to the N codewords included in each codebook, k = 0, ..., K - 1, $j_{cw,1} \in \{0, ..., N - 1\}$, and N is a quantity of codewords included in each of the K codebooks.

It should be noted that the K codewords are determined based on a same codeword index, for example, the first codeword index.

With reference to the first aspect, in some implementations of the first aspect, a $(k')^{th}$ cluster of modulation data in the K clusters of modulation data corresponds to a $(k'')^{th}$ codebook in the K codebooks. A codebook index of the $(k'')^{th}$ codebook is determined based on the identifier of the sending device, k' = 0, ... , K - 1, and k'' = 0, ... , K - 1.

Based on this implementation, the sending device may perform codebook hopping based on the identifier of the sending device. When a plurality of sending devices send data on a same time-frequency resource, because codebook hopping patterns selected by different sending devices are different, interference between data sent by different sending devices may be randomized, thereby improving demodulation performance of the receiving device.

With reference to the first aspect, in some implementations of the first aspect, the $(k')^{th}$ cluster of modulation data in the K clusters of modulation data corresponds to a $(j_{cw,1})^{th}$ codeword in the $(k'')^{th}$ codebook in the K codebooks, $j_{cw,1}$ is the first codeword index, the first codeword index is one of the N codeword indexes, and the N codeword indexes one to one correspond to the N codewords included in each codebook. The first codeword index is determined based on the identifier of the sending device, k' = 0, ..., K - 1, k'' = 0, ..., K - 1, and $j_{cw,1} \in \{0, ..., N - 1\}$.

Based on the solution, the sending device may perform codeword hopping based on the identifier of the sending device. When a plurality of sending devices send data on a same time-frequency resource, because codeword hopping patterns selected by different sending devices are different, interference between data sent by different sending devices may be randomized, thereby improving demodulation performance of the receiving device.

With reference to the first aspect, in some implementations of the first aspect, K codebook indexes one to one corresponding to the K clusters of modulation data are determined based on a pseudo-random sequence, where the K codebook indexes one to one correspond to the K codebooks. Initialization of the pseudo-random sequence is determined based on the identifier of the sending device.

Optionally, the pseudo-random sequence may be a Gold sequence or an m sequence.

It should be understood that the identifier of the sending device may indicate, identify, or correspond to an identifier of a corresponding terminal device. For example, the identifier of the sending device may be an index or a number that uniquely identifies the terminal device. The identifier may be configured by using signaling, preconfigured, or predefined.

It should be further understood that the identifier of the sending device may alternatively be an identifier indicating, identifying, or corresponding to a corresponding terminal device for transmission. The identifier may be configured by using signaling, preconfigured, or predefined. With reference to the first aspect, in some implementations of the first aspect, the first codeword index corresponding to the K clusters of modulation data is determined based on the pseudo-random sequence, where the first codeword index is one of the N codeword indexes, the N codeword indexes one to one correspond to the N codewords included in each codebook, and initialization of the pseudo-random sequence is determined based on the identifier of the sending device.

With reference to the first aspect, in some implementations of the first aspect, the K clusters of modulation data one to one correspond to K clusters of frequency positions, and the K clusters of frequency positions are determined based on a bit-map, or the K clusters of frequency positions are determined based on a combinatorial number system.

Optionally, the K clusters of frequency positions are predefined, indicated by higher layer signaling, or indicated by downlink control signaling.

For example, the sending device indicates, in a bit-map manner, positions of frequency resources to which K clusters of frequency data are mapped, where the K clusters of frequency data are obtained by performing Fourier transform on each of the K clusters of first data.

With reference to the first aspect, in some implementations of the first aspect, each of the K clusters of frequency positions includes a start frequency position and an end frequency position, and that the K clusters of frequency positions are determined based on the combinatorial number system includes: determining a signaling indication value $I_{idx}$; and determining the K clusters of frequency positions based on the signaling indication value $I_{idx}$ and a first relationship, where the first relationship indicates a relationship between the signaling indication value $I_{idx}$ and the start frequency position and the end frequency position of each cluster of frequency positions, and the first relationship satisfies:

$$I_{idx} = \sum_{k=0}^{2K-1} \binom{s_k}{k+1} = \binom{s_{2K-1}}{2K} + \cdots + \binom{s_0}{1}.$$

A $k^{th}$ cluster of frequency positions corresponds to the $k^{th}$ cluster of modulation data in the K clusters of modulation data, $S_{2k}$ represents a start frequency position of the $k^{th}$ cluster of frequency positions, $S_{2k+1}$ - 1 represents an end frequency position of the $k^{th}$ cluster of frequency positions, $S_{2K-1} > S_{2K-2} > \cdots > s_1 > s_0$, and k= 0, ..., K - 1.

Optionally, that the sending device determines the signaling indication value $I_{idx}$ may be that the sending device receives the signaling indication value from the base station.

According to a second aspect, a communication method is provided. The method may be performed by a receiving device, or may be performed by a chip or a circuit used in the receiving device. This is not limited in this application. For ease of description, the following uses an example in which the method is performed by the receiving device for description.

The method includes: determining K codewords, where the K codewords one to one correspond to K codebooks, positions of non-zero coefficients included in the K codewords are related, and K is an integer greater than 1; receiving a first symbol; and determining K clusters of modulation data based on the first symbol and the K codewords, where the K clusters of modulation data one to one correspond to the K codewords.

According to the solution provided in this application, the K clusters of modulation data are determined based on the K codewords and the first symbol with a low PAPR. The positions of the non-zero coefficients included in the K codewords are related, so that a possibility that a conflict occurs during signal transmission by a sending device can be reduced, and demodulation performance of the receiving device can also be improved.

Optionally, the K codebooks may be predefined, configured, or preconfigured, or indicated by signaling. For example, if the K codebooks are configured before delivery of the sending device, no signaling indication is needed. The K codebooks one to one correspond to the K clusters of modulation data, each of the K codebooks includes N codewords, quantities of elements included in all of the N codewords are the same, and N is an integer greater than 1. For another example, the receiving device sends configuration information to the sending device, to indicate the K codebooks, where the configuration information includes a quantity of the K codebooks, a length of each codeword, a value of an element included in each codebook, and the like.

With reference to the second aspect, in some implementations of the second aspect, a first codeword index is sent, where the first codeword index is one of N codeword indexes, the N codeword indexes one to one correspond to the N codewords included in each of the K codebooks, and the first codeword index is used to determine the K codewords from the K codebooks.

With reference to the second aspect, in some implementations of the second aspect, the determining the K codewords includes: determining the K codewords from the K codebooks.

With reference to the second aspect, in some implementations of the second aspect, the determining the K codewords from the K codebooks includes: determining the first codeword index, where the first codeword index is one of the N codeword indexes, and the N codeword indexes one to one correspond to the N codewords included in each codebook; and determining the K codewords from the K codebooks based on the first codeword index.

With reference to the second aspect, in some implementations of the second aspect, the determining the K clusters of modulation data based on the first symbol and the K codewords includes: sequentially performing Fourier transform, resource demapping, and inverse Fourier transform on the first symbol, to obtain K clusters of first data; and de-extending the K clusters of first data based on the K codewords, to obtain the K clusters of modulation data.

Further, the receiving device combines the K clusters of modulation data to obtain first modulation data.

With reference to the second aspect, in some implementations of the second aspect, that the positions of the non-zero coefficients included in the K codewords are related includes: When $L_{nonzero} \leq L$, positions of any two non-zero coefficients in positions of $L_{nonzero}$ non-zero coefficients are different; or when $L_{nonzero} > L$, $L_{nonzero}$ non-zero coefficients include L non-zero coefficients, and positions of any two non-zero coefficients in positions of the L non-zero coefficients are different. $L_{nonzero}$ represents a sum of quantities of elements of the non-zero coefficients included in the K codewords that are determined from the K codebooks based on the first codeword index, the first codeword index is one of the N codeword indexes, the N codeword indexes one to one correspond to the N codewords included in each codebook, and L represents a quantity of elements included in any one of the K codewords.

With reference to the second aspect, in some implementations of the second aspect, a length of a $k^{th}$ cluster of modulation data in the K clusters of modulation data is related to a quantity of non-zero coefficients included in a codeword corresponding to the $k^{th}$ cluster of modulation data, and k= 0, ..., K - 1.

With reference to the second aspect, in some implementations of the second aspect, K codebook indexes one to one corresponding to the K clusters of modulation data are determined based on a pseudo-random sequence, where the K codebook indexes one to one correspond to the K codebooks. Initialization of the pseudo-random sequence is determined based on an identifier of the sending device.

With reference to the second aspect, in some implementations of the second aspect, the first codeword index corresponding to the K clusters of modulation data is determined based on the pseudo-random sequence, the first codeword index is one of the N codeword indexes, and the N codeword indexes one to one correspond to the N codewords included in each of the K codebooks. Initialization of the pseudo-random sequence is determined based on the identifier of the sending device.

With reference to the second aspect, in some implementations of the second aspect, the K clusters of modulation data one to one correspond to K clusters of frequency positions, and the K clusters of frequency positions are determined based on a bit-map, or the K clusters of frequency positions are determined based on a combinatorial number system.

With reference to the second aspect, in some implementations of the second aspect, a (k')$^{th}$ cluster of modulation data in the K clusters of modulation data corresponds to a (k")$^{th}$ codebook in the K codebooks. A codebook index of the (k")$^{th}$ codebook is determined based on the identifier of the sending device, k' = 0, ..., K - 1, and k" = 0, ..., K - 1.

With reference to the second aspect, in some implementations of the second aspect, the (k')$^{th}$ cluster of modulation data in the K clusters of modulation data corresponds to a $(j_{cw,1})^{th}$ codeword in the (k")$^{th}$ codebook in the K codebooks, $j_{cw,1}$ is the first codeword index, the first codeword index is one of the N codeword indexes, and the N codeword indexes one to one correspond to the N codewords included in each codebook. The first codeword index is determined based on the identifier of the sending device, k' = 0, ..., K - 1, k" = 0, ..., K - 1, and $j_{cw,1} \in \{0, ..., N - 1\}$.

With reference to the second aspect, in some implementations of the second aspect, each of the K clusters of frequency positions includes a start frequency position and an end frequency position, and that the K clusters of frequency positions are determined based on the combinatorial number system includes: determining a signaling indication value $l_{idx}$ ; and determining the K clusters of frequency positions based on the signaling indication value $l_{idx}$ and a first relationship, where the first relationship indicates a relationship between the signaling indication value $l_{idx}$ and the start frequency position and the end frequency position of each cluster of frequency positions, and the first relationship satisfies:

$$l_{idx} = \sum_{k=0}^{2K-1} \binom{s_k}{k+1} = \binom{s_{2K-1}}{2K} + \cdots + \binom{s_0}{1}.$$

A k$^{th}$ cluster of frequency positions corresponds to the k$^{th}$ cluster of modulation data in the K clusters of modulation data, $S_{2k}$ represents a start frequency position of the k$^{th}$ cluster of frequency positions, $S_{2k+1}$ - 1 represents an end frequency position of the k$^{th}$ cluster of frequency positions, $s_{2K-1} > s_{2K-2} > \cdots > s_1 > s_0$, and k= 0, ... , K - 1.

For beneficial effect of the second aspect and some implementations of the second aspect, correspondingly refer to the related descriptions of the first aspect. Details are not described herein again.

According to a third aspect, a communication apparatus is provided, including: a processing unit, configured to determine K codewords, where the K codewords one to one correspond to K codebooks, positions of non-zero coefficients included in the K codewords are related, and K is an integer greater than 1, where the processing unit is further configured to generate a first symbol based on the K codewords and K clusters of modulation data, where the K codewords one to one correspond to the K clusters of modulation data; and a transceiver unit, configured to send the first symbol.

With reference to the third aspect, in some implementations of the third aspect, the K clusters of modulation data one to one correspond to the K codebooks, each of the K codebooks includes N codewords, quantities of elements included in all of the N codewords are the same, and N is an integer greater than 1.

With reference to the third aspect, in some implementations of the third aspect, the processing unit is further configured to determine the K codewords from the K codebooks.

With reference to the third aspect, in some implementations of the third aspect, the processing unit is further configured to determine a first codeword index, where the first codeword index is one of N codeword indexes, and the N codeword indexes one to one correspond to the N codewords included in each codebook; and the processing unit is further configured to determine the K codewords from the K codebooks based on the first codeword index.

With reference to the third aspect, in some implementations of the third aspect, an i$^{th}$ codebook $S_i$ in the K codebooks satisfies:

$$S_i = \{S_i^0, ..., S_i^{N-1}\},$$

where $S_i^j$ represents a j$^{th}$ codeword in the i$^{th}$ codebook, $S_i^j = [S_i^j(0), ..., S_i^j(L-1)]$ , L represents a quantity of elements included in the j$^{th}$ codeword, a value of at least one element in the L elements included in $S_i^j$ is 0, $S_i^j(m)$ represents an m$^{th}$ element in the j$^{th}$ codeword, m = 0, ... , L - 1, i and j are integers, i = 0, ... , K - 1, and j = 0, ..., N - 1.

With reference to the third aspect, in some implementations of the third aspect, that the positions of the non-zero coefficients included in the K codewords are related includes: When $L_{nonzero} \leq L$, positions of any two non-zero coefficients in positions of $L_{nonzero}$ non-zero coefficients are different; or when $L_{nonzero} > L$, $L_{nonzero}$ non-zero coefficients include $L$ non-zero coefficients, and positions of any two non-zero coefficients in positions of the $L$ non-zero coefficients are different. $L_{nonzero}$ represents a sum of quantities of elements of the non-zero coefficients included in the K codewords that are determined from the K codebooks based on the first codeword index, the first codeword index is one of the N codeword indexes, the N codeword indexes one to one correspond to the N codewords included in each codebook, and $L$ represents a quantity of elements included in any one of the K codewords.

It should be understood that, for all non-zero coefficients included in the K codewords, any non-zero coefficient corresponds to one of the K codewords, and a position of any non-zero coefficient in positions of all the non-zero coefficients included in the K codewords is a position of the non-zero coefficient in a corresponding codeword.

With reference to the third aspect, in some implementations of the third aspect, the first symbol is obtained by combining K first sub-symbols, and the K first sub-symbols are generated based on K clusters of first data.

With reference to the third aspect, in some implementations of the third aspect, a length of a k$^{th}$ cluster of modulation data in the K clusters of modulation data is related to a quantity of non-zero coefficients included in a codeword corresponding to the k$^{th}$ cluster of modulation data, and k= 0, ..., K - 1.

With reference to the third aspect, in some implementations of the third aspect, the K clusters of modulation data are obtained by splitting first modulation data, and the first modulation data is obtained through modulation of bit data.

With reference to the third aspect, in some implementations of the third aspect, the processing unit is further configured to extend the K clusters of modulation data based on the K codewords, to obtain the K clusters of first data; and the processing unit is further configured to generate the first symbol based on the K clusters of first data.

With reference to the third aspect, in some implementations of the third aspect, the processing unit is further configured to extend the k$^{th}$ cluster of modulation data based on a $(j_{cw,1})^{th}$ codeword in a k$^{th}$ codebook, to obtain a k$^{th}$ cluster of first data, where $j_{cw,1}$ is the first codeword index, the first codeword index is one of the N codeword indexes, the N codeword indexes one to one correspond to the N codewords included in each codebook, k = 0, ..., K - 1, j = 0, ..., N - 1, $j_{cw,1}$ $\in$ {0, ... , N - 1}, and N is a quantity of codewords included in each of the K codebooks.

With reference to the third aspect, in some implementations of the third aspect, a (k')$^{th}$ cluster of modulation data in the K clusters of modulation data corresponds to a (k")$^{th}$ codebook in the K codebooks. A codebook index of the (k")$^{th}$ codebook is determined based on an identifier of the sending device, k' = 0, ... , K - 1, and k" = 0, ..., K - 1.

With reference to the third aspect, in some implementations of the third aspect, the (k')$^{th}$ cluster of modulation data in the K clusters of modulation data corresponds to a $(j_{cw,1})^{th}$ codeword in the (k")$^{th}$ codebook in the K codebooks, $j_{cw,1}$ is the first codeword index, the first codeword index is one of the N codeword indexes, and the N codeword indexes one to one correspond to the N codewords included in each codebook. The first codeword index is determined based on the identifier of the sending device, k' = 0, ..., K - 1, k" = 0, ..., K - 1, and $j_{cw,1}$ $\in$ {0, ..., N - 1}.

With reference to the third aspect, in some implementations of the third aspect, the processing unit is further configured to determine K codebook indexes one to one corresponding to the K clusters of modulation data based on a pseudo-random sequence, where the K codebook indexes one to one correspond to the K codebooks. Initialization of the pseudo-random sequence is determined based on the identifier of the sending device.

With reference to the third aspect, in some implementations of the third aspect, the processing unit is further configured to determine the first codeword index corresponding to the K clusters of modulation data based on the pseudo-random sequence, where the first codeword index is one of the N codeword indexes, and the N codeword indexes one to one correspond to the N codewords included in each codebook. Initialization of the pseudo-random sequence is determined based on the identifier of the sending device.

With reference to the third aspect, in some implementations of the third aspect, the K clusters of modulation data one to one correspond to K clusters of frequency positions, and the K clusters of frequency positions are determined based on a bit-map, or the K clusters of frequency positions are determined based on a combinatorial number system.

With reference to the third aspect, in some implementations of the third aspect, each of the K clusters of frequency positions includes a start frequency position and an end frequency position, and that the K clusters of frequency positions are determined based on the combinatorial number system includes: determining a signaling indication value $l_{idx}$; and determining the K clusters of frequency positions based on the signaling indication value $l_{idx}$ and a first relationship, where the first relationship indicates a relationship between the signaling indication value $l_{idx}$ and the start frequency position and the end frequency position of each cluster of frequency positions, and the first relationship satisfies:

$$l_{idx} = \sum_{k=0}^{2K-1} \binom{s_k}{k+1} = \binom{s_{2K-1}}{2K} + \cdots + \binom{s_0}{1}.$$

A k$^{th}$ cluster of frequency positions corresponds to the k$^{th}$ cluster of modulation data in the K clusters of modulation data, $S_{2k}$ represents a start frequency position of the k$^{th}$ cluster of frequency positions, $S_{2k+1}$ - 1 represents an end frequency position of the $k^{th}$ cluster of frequency positions, and k= 0, ..., K - 1.

According to a fourth aspect, a communication apparatus is provided, including: a processing unit, configured to determine K codewords, where the K codewords one to one correspond to K codebooks, positions of non-zero coefficients included in the K codewords are related, and K is an integer greater than 1; and a transceiver unit, configured to receive a first symbol, where the processing unit is further configured to determine K clusters of modulation data based on the first symbol and the K codewords, where the K clusters of modulation data one to one correspond to the K codewords.

With reference to the fourth aspect, in some implementations of the fourth aspect, the transceiver unit is further configured to send a first codeword index, where the first codeword index is one of N codeword indexes, the N codeword indexes one to one correspond to the N codewords included in each of the K codebooks, the first codeword index is used to determine the K codewords from the K codebooks, and N is an integer greater than 1.

With reference to the fourth aspect, in some implementations of the fourth aspect, the processing unit is further configured to determine the K codewords from the K codebooks.

With reference to the fourth aspect, in some implementations of the fourth aspect, the processing unit is further configured to determine the first codeword index, where the first codeword index is one of the N codeword indexes, and the N codeword indexes one to one correspond to the N codewords included in each codebook; and the processing unit is further configured to determine the K codewords from the K codebooks based on the first codeword index.

With reference to the fourth aspect, in some implementations of the fourth aspect, the processing unit is further configured to sequentially perform Fourier transform, resource demapping, and inverse Fourier transform on the first symbol, to obtain K clusters of first data; and the processing unit is further configured to de-extend the K clusters of first data based on the K codewords, to obtain the K clusters of modulation data.

Further, the processing unit is further configured to combine the K clusters of modulation data to obtain first modulation data.

With reference to the fourth aspect, in some implementations of the fourth aspect, that the positions of the non-zero coefficients included in the K codewords are related includes: When $L_{nonzero} \leq L$, positions of any two non-zero coefficients in positions of $L_{nonzero}$ non-zero coefficients are different; or when $L_{nonzero} > L$, $L_{nonzero}$ non-zero coefficients include $L$ non-zero coefficients, and positions of any two non-zero coefficients in positions of the $L$ non-zero coefficients are different. $L_{nonzero}$ represents a sum of quantities of elements of the non-zero coefficients included in the K codewords that are determined from the K codebooks based on the first codeword index, the first codeword index is one of the N codeword indexes, the N codeword indexes one to one correspond to the N codewords included in each codebook, and $L$ represents a quantity of elements included in any one of the K codewords.

With reference to the fourth aspect, in some implementations of the fourth aspect, a length of a $k^{th}$ cluster of modulation data in the K clusters of modulation data is related to a quantity of non-zero coefficients included in a codeword corresponding to the $k^{th}$ cluster of modulation data, and k= 0, ..., K - 1.

With reference to the fourth aspect, in some implementations of the fourth aspect, the processing unit is further configured to determine K codebook indexes one to one corresponding to the K clusters of modulation data based on a pseudo-random sequence, where the K codebook indexes one to one correspond to the K codebooks. Initialization of the pseudo-random sequence is determined based on an identifier of the sending device.

With reference to the fourth aspect, in some implementations of the fourth aspect, the processing unit is further configured to determine the first codeword index corresponding to the K clusters of modulation data based on the pseudo-random sequence, where the first codeword index is one of the N codeword indexes, and the N codeword indexes one to one correspond to the N codewords included in each of the K codebooks. Initialization of the pseudo-random sequence is determined based on the identifier of the sending device.

With reference to the fourth aspect, in some implementations of the fourth aspect, the K clusters of modulation data one to one correspond to K clusters of frequency positions, and the K clusters of frequency positions are determined based on a bit-map, or the K clusters of frequency positions are determined based on a combinatorial number system.

With reference to the fourth aspect, in some implementations of the fourth aspect, a $(k')^{th}$ cluster of modulation data in the K clusters of modulation data corresponds to a $(k'')^{th}$ codebook in the K codebooks. A codebook index of the $(k'')^{th}$ codebook is determined based on the identifier of the sending device, k' = 0, ..., K - 1, and k'' = 0, ..., K - 1.

With reference to the fourth aspect, in some implementations of the fourth aspect, the $(k')^{th}$ cluster of modulation data in the K clusters of modulation data corresponds to a $(j_{cw,1})^{th}$ codeword in the $(k'')^{th}$ codebook in the K codebooks, $j_{cw,1}$ is the first codeword index, the first codeword index is one of the N codeword indexes, and the N codeword indexes one to one correspond to the N codewords included in each codebook. The first codeword index is determined based on the identifier of the sending device, k' = 0, ..., K - 1, k'' = 0, ..., K - 1, and $j_{cw,1} \in \{0, ..., N - 1\}$.

With reference to the fourth aspect, in some implementations of the fourth aspect, each of the K clusters of frequency positions includes a start frequency position and an end frequency position, and that the K clusters of frequency positions are determined based on the combinatorial number system includes: determining a signaling indication value $I_{idx}$; and determining the K clusters of frequency positions based on the signaling indication value $I_{idx}$ and a first relationship, where the first relationship indicates a relationship between the signaling indication value $I_{idx}$ and the start frequency position and the end frequency position of each cluster of frequency positions, and the first relationship satisfies:

$$I_{idx} = \sum_{k=0}^{2K-1} \binom{s_k}{k+1} = \binom{S_{2K-1}}{2K} + \cdots + \binom{S_0}{1}.$$

A $k^{th}$ cluster of frequency positions corresponds to the $k^{th}$ cluster of modulation data in the K clusters of modulation data, $S_{2k}$ represents a start frequency position of the $k^{th}$ cluster of frequency positions, $S_{2k+1}$ - 1 represents an end frequency position of the $k^{th}$ cluster of frequency positions, $s_{2K-1} > s_{2K-2} > \cdots > s_1 > s_0$, and k= 0, ... , K - 1.

According to a fifth aspect, a communication apparatus is provided, including a transceiver, a processor, and a memory. The processor is configured to control the transceiver to receive and send a signal. The memory is configured to store a computer program. The processor is configured to: invoke the computer program from the memory and run the computer program, to enable the communication apparatus to perform the method according to any one of the possible implementations of the first aspect or the second aspect.

Optionally, there are one or more processors, and there are one or more memories.

Optionally, the memory may be integrated with the processor, or the memory and the processor may be disposed separately.

Optionally, the communication apparatus further includes a transmit machine (transmitter) and a receive machine (receiver).

According to a sixth aspect, a communication apparatus is provided. The communication apparatus may be a first apparatus, may be a module or a unit (for example, a chip, a chip system, or a circuit), in the first apparatus, that performs and that one-to-one corresponds to the method, the operations, the steps, or the actions described in the first aspect, or may be an apparatus that can be used in combination with the first apparatus.

According to a seventh aspect, a communication system is provided, including a sending device and a receiving device. The sending device is configured to perform the method in any one of the possible implementations of the first aspect, and the receiving device is configured to perform the method in any one of the possible implementations of the second aspect. Optionally, the communication system may further include another device that can be used in combination with the sending device and/or the receiving device.

According to an eighth aspect, a computer-readable storage medium is provided. The computer-readable storage medium stores a computer program or code. When the computer program or code is run on a computer, the computer is enabled to perform the method in any one of the possible implementations of the first aspect or the second aspect.

According to a ninth aspect, a chip is provided, including at least one processor. The at least one processor is coupled to a memory. The memory is configured to store a computer program. The processor is configured to: invoke the computer program from the memory and run the computer program, to enable an apparatus on which a chip system is installed to perform the method according to any one of the possible implementations of the first aspect or the second aspect. The chip may include an input circuit or interface for sending information or data, and an output circuit or interface for receiving information or data.

According to a tenth aspect, a computer program product is provided. The computer program product includes computer program code. When the computer program code is run on an apparatus, the apparatus is enabled to perform the method in any one of the possible implementations of the first aspect or the second aspect.

**BRIEF DESCRIPTION OF DRAWINGS**

FIG. 1 is a diagram of a structure of a communication system 100 applicable to an embodiment of this application;
FIG. 2 is a diagram of a time-frequency resource according to an embodiment of this application;
FIG. 3 is a schematic flowchart of a communication method 300 according to an embodiment of this application;
FIG. 4 is a diagram of complementary codebooks according to an embodiment of this application;
FIG. 5 is a diagram of partially complementary codebooks according to an embodiment of this application;
FIG. 6 is a diagram of other partially complementary codebooks according to an embodiment of this application;
FIG. 7 is a schematic flowchart of a first symbol generation method 700 according to an embodiment of this application;
FIG. 8 is a schematic flowchart of a communication method 800 according to an embodiment of this application;
FIG. 9 is a diagram of a structure of a communication apparatus 1000 according to an embodiment of this application;
FIG. 10 is a diagram of a structure of a communication apparatus 2000 according to an embodiment of this application; and
FIG. 11 is a diagram of a structure of a chip system 3000 according to an embodiment of this application.

## DESCRIPTION OF EMBODIMENTS

The following describes technical solutions of embodiments of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to a future communication system, for example, a 6th generation (6th generation, 6G) mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. The V2V refers to communication between vehicles. The V2P refers to communication between a vehicle and a person (including a pedestrian, a bicyclist, a driver, a passenger, or the like). The V2I refers to communication between a vehicle and an infrastructure. The infrastructure is, for example, a road side unit (road side unit, RSU) or a network device. The RSU includes two types: a terminal-type RSU and a base station-type RSU. Because the terminal-type RSU is deployed on a road side, the terminal-type RSU is in a non-mobility state, and mobility does not need to be considered. The base station-type RSU may provide timing synchronization and resource scheduling for a vehicle that communicates with the base station-type RSU. The V2N refers to communication between a vehicle and a network device. It may be understood that the foregoing descriptions are examples, and are not limited in embodiments of this application. For example, V2X may further include NR system-based V2X communication in current 3GPP Rel-16 and later releases.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication apparatus, a user agent, or a user apparatus.

The terminal device may be a device that provides voice/data for a user, for example, a handheld device having a wireless connection function or a vehicle-mounted device. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in 6G and a future evolved public land mobile communication network (public land mobile network, PLMN), or the like. This is not limited in embodiments of this application.

By way of example rather than limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device, namely, a terminal apparatus, may be a terminal device; or may be an apparatus that can support the terminal device in implementing the function, for example, a chip system or a chip, where the apparatus may be mounted in the terminal device. In embodiments of this application, the chip system may include a chip, or may include a chip and another discrete device.

In embodiments of this application, the network device may be a device configured to communicate with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, the helicopter or the uncrewed aerial vehicle may be configured as a device for communicating with another base station.

In some deployments, the network device mentioned in embodiments of this application may be a device including a CU or a DU, a device including a CU and a DU, or a device including a CU control plane node (a central unit-control plane (central unit-control plane, CU-CP)), a CU user plane node (a central unit-user plane (central unit-user plane, CU-UP)), and a DU node.

In embodiments of this application, an apparatus configured to implement a function of the network device may be a network device; or may be an apparatus that can support the network device in implementing the function, for example, a chip system or a chip, where the apparatus may be mounted in the network device. In embodiments of this application, the chip system may include a chip, or may include a chip and another discrete device.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application.

It should be noted that the technical solutions of this application are mainly applied to a sidelink transmission scenario, and a used frequency band includes, but is not limited to, an unlicensed spectrum. The unlicensed spectrum includes a frequency band near 2.4 gigahertz (GHz), a frequency band near 5.8 GHz, and the like. Optionally, in embodiments of this application, the terminal device and the access network device can perform wireless communication (for example, perform uplink information or downlink information transmission) through an unlicensed spectrum resource. The communication system may use a licensed-assisted access (licensed-assisted access, LAA) technology, dual connectivity (dual connectivity, DC) technology, an unlicensed-assisted access (standalone) technology, or the like.

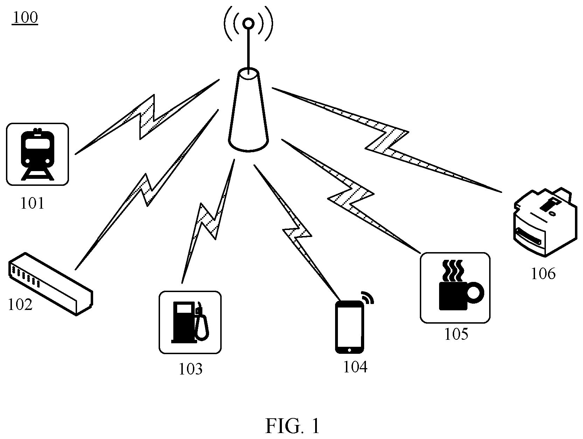

A communication system applicable to embodiments of this application is briefly described below with reference to FIG. 1.

FIG. 1 is a diagram of a structure of a communication system applicable to an embodiment of this application. As shown in FIG. 1, the communication system in this embodiment of this application may include a network device (for example, a gNB) and a terminal device (for example, a UE 1 to a UE 6). The network device may include one or more antennas. In addition, the network device may additionally include a transmit machine chain and a receive machine chain. A person of ordinary skill in the art may understand that the transmit machine chain and the receive machine chain each may include a plurality of components (for example, a processor, a modulator, a multiplexer, a demodulator, a demultiplexer, or an antenna) related to signal sending and receiving. FIG. 1 is merely a simplified diagram as an example. A quantity of terminal devices in the communication system in FIG. 1 is merely an example. The quantity of terminal devices in the communication system may be another quantity. In addition, the communication system may further include another communication apparatus, which is not shown in FIG. 1. In the communication system, the terminal device (for example, the UE 1 to the UE 6) may determine a frequency resource from a frequency resource set, and send an uplink signal to the network device (for example, the gNB) on the frequency resource. Correspondingly, the network device (for example, the gNB) receives the uplink signal. Similarly, in the communication system, the network device (for example, the gNB) may also send a downlink signal to the terminal device (for example, the UE 1 to the UE 6) on the determined frequency resource.

It should be noted that a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be a sending device, or may be a functional module that is in the sending device and that can invoke and execute the program, may be a module or a unit (for example, a chip, a chip system, or a circuit) that is in the sending device and that one-to-one corresponds to the method, the operations, the steps, or the actions described in the first aspect, or may be another apparatus that can be used in combination with the sending device.

For ease of understanding embodiments of this application, terms or technologies in this application are briefly described first.

1. Time domain unit and frequency domain unit

Data or information may be carried by using a time-frequency resource, and the time-frequency resource includes a time domain resource and/or a frequency domain resource.

In time domain, a time domain resource may include one or more time domain units (which may also be referred to as time units). In embodiments of this application, one time unit may include several time domain resources. The time domain unit is, for example, a radio frame (radio frame, RF), and a time domain resource included in the time domain unit is, for example, a subframe (subframe), a frame, a half-subframe or a half-frame, a slot (slot), a sub-slot (sub-slot), a mini-slot (mini-slot), a partial slot (partial slot), or an orthogonal frequency division multiplexing (orthogonal frequency division multiplexing, OFDM) symbol (symbol). Alternatively, the time domain unit may be a set of one or more time domain resources. For example, the time domain unit is one or more OFDM symbols in one slot. For example, a quantity of the one or more OFDM symbols is 6, 7, 12, or 14. The one or more time units may be contiguous or discrete in time, or may be time units of other lengths. Optionally, in embodiments of this application, the time domain resource may also be referred to as a sub time domain unit, or the "time domain resource" and the "sub time domain unit" may be a same concept, and the two are interchangeable. In addition, duration of the slot may be related to a subcarrier spacing. For example, when the subcarrier spacing is 15 kilohertz (kHz), duration of one slot is 1 millisecond (ms); when the subcarrier spacing is 30 kHz, duration of one slot is 0.5 ms; or when the subcarrier spacing is 60 kHz, duration of one slot is 0.25 ms. Similarly, it can be learned through deduction that, when the subcarrier spacing is $15*2^\mu$ kHz, duration of one slot is $2^{-\mu}$ ms, where $\mu=0, 1, 2, ....$

In frequency domain, a frequency domain resource may include one or more frequency domain units. Optionally, the frequency domain resource may be replaced with a frequency resource (frequency resource), indicating a resource used to carry frequency data. A frequency domain unit may be a resource element (resource element, RE), a resource block (resource block, RB), a sub-channel (sub-channel), a resource pool (resource pool), a resource set, a bandwidth (bandwidth), a bandwidth part (bandwidth part, BWP), a carrier (carrier), a channel (channel), an interlace (interlace) RB, or the like. Optionally, one carrier may include one or more BWPs. Optionally, one BWP may include one or more resource pools. One BWP may include one or more RB sets, and each RB set includes one or more RBs. Optionally, one resource pool may include one or more RBs or sub-channels. Optionally, one sub-channel may include one or more RBs. One RB may include one or more REs. Optionally, in embodiments of this application, an RE may be equivalent to a subcarrier. In other words, one RE is one subcarrier, or one subcarrier is one RE. One subcarrier may generally carry a complex signal, for example, a modulation symbol (modulation symbol).

In other words, data may be transmitted between the network device and the terminal device by using a time-frequency resource.

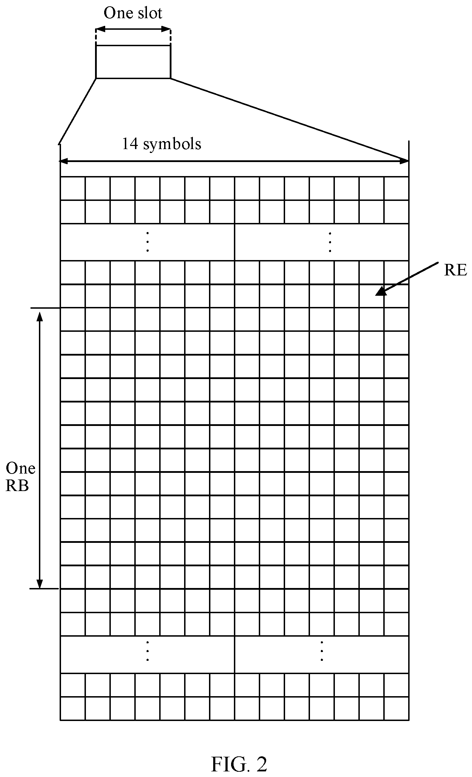

FIG. 2 is a diagram of a time-frequency resource according to an embodiment of this application. For example, a time domain resource is a slot, and a frequency domain resource is an RB. One slot may include 14 time domain symbols, and one RB may include 12 subcarriers. One RE may be considered as a minimum resource unit used for data transmission, or one RE is a minimum resource unit used for resource mapping of to-be-sent data. As shown in FIG. 2, one RE corresponds to one symbol in time domain, for example, an orthogonal frequency division multiplexing (orthogonal frequency division multiplexing, OFDM) symbol or a discrete Fourier transform spread orthogonal frequency division multiplexing (discrete Fourier transform spread orthogonal frequency division multiplexing, DFT-s-OFDM) symbol. One RE corresponds to one subcarrier in frequency domain, and one RE may be used to map one complex symbol, for example, a complex symbol obtained through modulation or a complex symbol obtained through precoding. This is not limited in this application. It should be understood that FIG. 2 is merely a diagram of a possible time-frequency resource provided for ease of understanding. A specific form of the time-frequency resource is not limited in this application.

The foregoing briefly describes terms used in this application. Details are not described in the following embodiments. In addition, the foregoing descriptions of the terms are merely descriptions for ease of understanding, and do not limit the protection scope of embodiments of this application.

In a grant free (grant free) system, a plurality of terminal devices each select a part of a time-frequency resource from a shared time-frequency resource to send data. Time-frequency resources selected by different terminal devices may completely or partially overlap. In other words, interference may be generated when different terminal devices perform data transmission, and data demodulation performance of a network device may be affected. Particularly, in a large-scale access scenario, as a quantity of access devices (terminal devices) increases, a probability that time-frequency resources selected by the terminal devices for sending data overlap is higher. As a result, mutual interference between different terminal devices when different terminal devices simultaneously transmit data is greater. For example, when data sent by different terminal devices partially overlaps (for example, data of a half bandwidth is interfered), demodulation performance of a system may be significantly affected. In this case, the sent data may be split into a plurality of clusters of data, and the plurality of clusters of data are mapped to frequency resources. Each cluster of data is contiguously mapped, and frequency resources to which different clusters of data are mapped do not overlap. Positions of frequency resources to which a plurality of clusters of data corresponding to different sending devices are mapped are designed, so that interference between data can be reduced. However, a peak-to-average power ratio PAPR of an SC-FDMA symbol generated based on the plurality of clusters of data increases. Consequently, energy for sending data may be reduced, and demodulation performance may be reduced. For example, an LTE system supports generation of an SC-FDMA symbol of dual-cluster data, and a peak-to-average power ratio PAPR of the SC-FDMA symbol is slightly higher than that of a conventional SC-FDMA symbol.

In view of this, this application provides a communication method and a communication apparatus. A first symbol with a low PAPR is generated based on K codewords and K clusters of modulation data. Positions of non-zero coefficients included in the K codewords are related, so that a possibility that a conflict occurs during signal transmission by a sending device can be reduced, and demodulation performance of a receiving device can also be improved.

For ease of understanding of embodiments of this application, the following descriptions are provided.

(1) In this application, unless otherwise stated or there is a logic conflict, terms and/or descriptions in different embodiments are consistent and may be mutually referenced, and technical features in different embodiments may be combined based on an internal logical relationship thereof, to form a new embodiment.

(2) In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof means any combination of these items, including a singular item (piece) or any combination of plural items (pieces). For example, at least one of a, b, and c may indicate a, b, c, a and b, a and c, b and c, or a, b, and c. Each of a, b, and c may be in a singular form or a plural form.

(3) In this application, "first", "second", and various numbers are used for differentiation for ease of description, and are not used to limit the scope of embodiments of this application, for example, are intended to distinguish between different messages but not to describe a specific order or sequence. It should be understood that objects described in such a way are interchangeable in an appropriate circumstance, so that a solution other than embodiments of this application can be described.

(4) In this application, the terms "include", "have", and any variants thereof are intended to cover a non-exclusive inclusion. For example, a process, a method, a system, a product, or a device that includes a series of steps or units is not necessarily limited to those steps or units that are clearly listed, but may include other steps or units that are not clearly listed or are inherent to the process, method, product, or device.

(5) In this application, "indicate" may include direct indication and indirect indication. When a piece of indication information indicates A, the indication information may directly indicate A or indirectly indicate A, but it does not indicate that the indication information definitely carries A.

(6) In this application, the "protocol" may be a standard protocol in the communication field, for example, may include a 5G protocol, an NR protocol, and a related protocol applied to 6G or a future communication system. This is not limited in this application. "Predefinition" may include definition in advance, for example, definition in a protocol. "Preconfiguration" may be implemented by pre-storing corresponding code or a corresponding table in a device, or may be implemented in another manner that may indicate related information. A specific implementation thereof is not limited in this application.

(7) In this application, a configuration may be a signaling configuration, or may be described as configuration signaling. For example, the signaling configuration is configured by using signaling sent by a base station, where the signaling may be a radio resource control (radio resource control, RRC) message, downlink control information (downlink control information, DCI), or a system information block (system information block, SIB). For another example, the signaling configuration may be preconfigured signaling sent to a sending device, or may be configured to the sending device in a preconfiguration manner. The preconfiguration herein is to define or configure a value of a corresponding parameter in advance in a protocol manner, and store the value in the sending device during communication with the sending device.

(8) In this application, "communication" may also be described as "data transmission", "information transmission", "data processing", or the like. "Transmission" includes "sending" and "receiving".

(9) In this application, "*" is an operation symbol, and represents a product, that is, a*b represents multiplication of two numbers. Optionally, unless otherwise specified, a*b may be replaced with ab, axb, or a·b. This is not limited in this application.

The following describes, in detail with reference to the accompanying drawings, a communication method provided in embodiments of this application. Embodiments provided in this application are applicable to any communication scenario in which a transmit-end device communicates with a receive-end device, for example, may be applied to the communication system shown in FIG. 1.

It should be understood that embodiments of this application are applicable to any communication scenario in which a transmit-end device communicates with a receive-end device. In other words, embodiments of this application are applicable to an uplink communication scenario or a downlink communication scenario. For example, uplink communication is communication between a terminal device and a network device. In this case, a sending device is the terminal device, and a receiving device is the network device. Downlink communication is communication between a network device and a terminal device. In this case, a sending device is the network device, and a receiving device is the terminal device. Therefore, the sending device may be the network device or the terminal device, and the receiving device may also be the network device or the terminal device. This is not limited in this application.

Without loss of generality, for ease of understanding and description, in the following embodiments of this application, an uplink communication scenario in a grant free system is used as an example to describe the solutions of this application. For example, the sending device may be a UE, and the receiving device may be a base station. It should be understood that for an implementation in the downlink communication scenario, refer to related descriptions of the uplink communication scenario. Details are not described in this application.

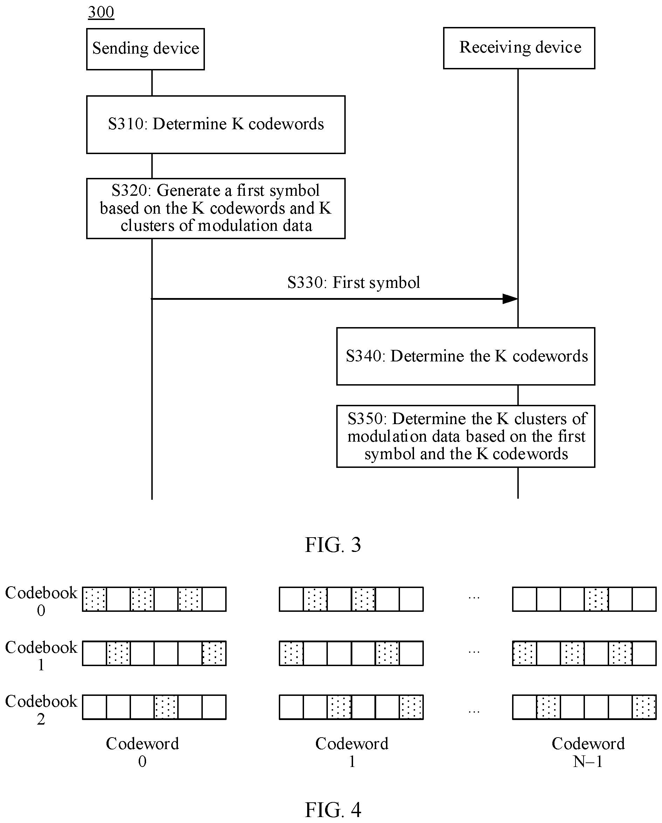

FIG. 3 is a schematic flowchart of a communication method 300 according to an embodiment of this application. As shown in FIG. 3, a procedure of the method may be performed by a sending device and a receiving device, or may be performed by a module and/or a component (for example, a chip or an integrated circuit) that are/is installed in the sending device and the receiving device and that have/has corresponding functions. This is not limited in this application. The following uses the sending device and the receiving device as execution bodies for description, and a plurality of following steps are included.

S310: The sending device determines K codewords.

In a first implementation, the sending device determines the K codewords from K codebooks.

The K codewords one to one correspond to the K codebooks, and the K codewords one to one correspond to K clusters of modulation data. In other words, the K clusters of modulation data one to one correspond to the K codebooks. In addition, positions of non-zero coefficients included in the K codewords are related, and K is an integer greater than 1.

For example, that the K codewords one to one correspond to the K codebooks may be understood as that each codeword corresponds to one codebook, and codebooks corresponding to all of the codewords are different from each other.

For example, that the K codewords one to one correspond to the K clusters of modulation data may be understood as that each cluster of modulation data corresponds to one codeword, and codewords corresponding to all of the clusters of modulation data are different from each other. In other words, each of the K clusters of modulation data is mapped to a resource corresponding to any one of the K codewords, and codewords to which all of the clusters of modulation data are mapped are different from each other.

Therefore, that the K clusters of modulation data one to one correspond to the K codebooks may be understood as that each cluster of modulation data corresponds to one codebook, and codebooks corresponding to all of the clusters of modulation data are different from each other. In other words, the K codebooks, the K codewords, and the K clusters of modulation data are in one-to-one correspondence.

In a second implementation, the sending device determines a first codeword index, and determines the K codewords from K codebooks based on the first codeword index. The first codeword index is one of N codeword indexes, the N codeword indexes one to one correspond to N codewords included in each codebook, and N is an integer greater than 1.

In an example, the first codeword index may be predefined, configured, or preconfigured, or indicated by signaling. For example, the receiving device sends indication information to the sending device. Correspondingly, the receiving device receives indication information from the sending device, where the indication information indicates the first codeword index. Optionally, the indication information includes a direct indication or an indirect indication of the first codeword index. For example, the indication information carries the first codeword index.

In another example, that the sending device determines the first codeword index may be: The sending device determines, based on a pseudo-random sequence, the first codeword index corresponding to K clusters of modulation data, where initialization of the pseudo-random sequence is determined based on an identifier of the sending device. Optionally, the pseudo-random sequence may be a Gold sequence (gold sequence) or an m sequence.

It should be understood that the identifier of the sending device may indicate, identify, or correspond to an identifier of a corresponding terminal device. For example, the identifier of the sending device may be an index or a number that uniquely identifies the terminal device. The identifier may be configured by using signaling, preconfigured, or predefined. For example, the identifier of the sending device may be any one of the following: a medium access control (medium access control, MAC) address, a subscriber identity module (subscriber identity module, SIM) card number, an international mobile equipment identity (international mobile equipment identity, IMEI), and the like of the sending device.

It should be further understood that the identifier of the sending device may alternatively be an identifier indicating, identifying, or corresponding to a corresponding terminal device for transmission. The identifier may be configured by using signaling, preconfigured, or predefined. For example, the identifier is an internet protocol (Internet Protocol, IP) address, a network temporary identifier (radio network temporary identifier, RNTI), a source identifier of the sending device, or a destination identifier of the receiving device. Optionally, the source identifier of the sending device may be an identifier associated with a specific to-be-sent service or message. Optionally, the destination identifier of the receiving device may be an identifier associated with a specific to-be-received service or message.

In this embodiment of this application, that the positions of the non-zero coefficients included in the K codewords are related may be described as that the non-zero coefficients included in the K codewords are complementary. In this embodiment of this application, that the positions of the non-zero coefficients included in the K codewords are related includes: Positions of all non-zero coefficients included in the K codewords are related, or positions of some non-zero coefficients included in the K codewords are related. Similarly, that the non-zero coefficients included in the K codewords are complementary includes: All non-zero coefficients included in the K codewords are complementary (which may be referred to as completely complementary), or some non-zero coefficients included in the K codewords are complementary (which may be referred to as partially complementary). In other words, the positions of the non-zero coefficients included in the K codewords are completely different or partially different.

Optionally, that all the non-zero coefficients included in the K codewords are complementary means that a quantity of all the non-zero coefficients included in the K codewords is equal to a length of a codeword, and the positions of the non-zero coefficients included in the K codewords are completely different.

Optionally, that all the non-zero coefficients included in the K codewords are not complementary means that a quantity of all the non-zero coefficients included in the K codewords is not equal to a length of a codeword. When the quantity of all the non-zero coefficients included in the K codewords is greater than the length of the codeword, it may be understood that the positions of the non-zero coefficients included in the K codewords are partially different, that is, there are two non-zero coefficients having a same position.

Optionally, when the quantity of all the non-zero coefficients included in the K codewords is less than the length of the codeword, and the positions of the non-zero coefficients included in the K codewords are completely different, all the non-zero coefficients included in the K codewords may be referred to as being partially complementary.

Optionally, when the quantity of all the non-zero coefficients included in the K codewords is greater than the length of the codeword, and positions of some non-zero coefficients included in the K codewords are completely different, all the non-zero coefficients included in the K codewords may be referred to as being partially complementary.

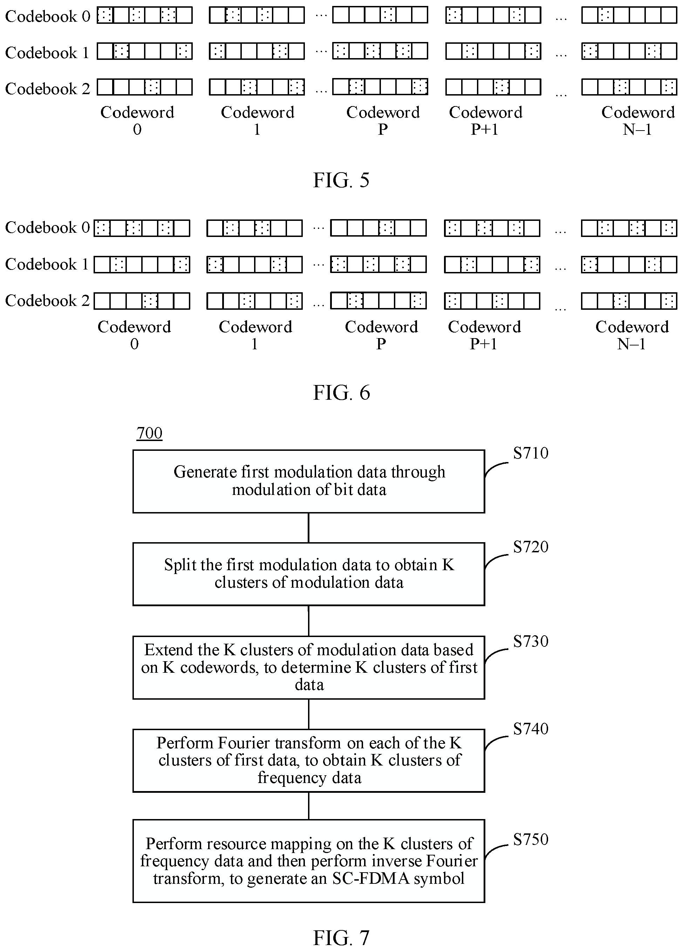

With reference to FIG. 4 and FIG. 5, the following separately describes in detail, for two cases in which $L_{nonzero} \leq L$ and $L_{nonzero} > L$, a meaning of the positions of the non-zero coefficients included in the K codewords being related.

In an example, when $L_{nonzero} \leq L$, positions of any two non-zero coefficients in positions of $L_{nonzero}$ non-zero coefficients are different.

$L_{nonzero}$ represents a sum of quantities of elements of the non-zero coefficients included in the K codewords that are determined by the sending device in step S310, and $L$ represents a quantity of elements included in any one of the K codewords.

It should be understood that when $L_{nonzero} < L$, a quantity of all non-zero coefficients of K codewords that are determined from the K codebooks based on a same codeword index is less than a length $L$ of a codeword. In this case, positions of any two non-zero coefficients in the $L_{nonzero}$ non-zero coefficients are different. Therefore, it may be understood that the positions of the $L_{nonzero}$ non-zero coefficients are $L_{nonzero}$ values from 0 to $L$ - 1. 0 to $L$ - 1 are not traversed for the positions of the $L_{nonzero}$ non-zero coefficients, that is, all positions of one codeword are not traversed. Therefore, positions of all the non-zero coefficients of the K codewords that are determined from the K codebooks based on the same codeword index may be referred to as being not complementary or being partially complementary.

It should be understood that when $L_{nonzero} = L$, a quantity of all non-zero coefficients of K codewords that are determined from the K codebooks based on a same codeword index is a length $L$ of a codeword. In this case, positions of any two non-zero coefficients in $L$ non-zero coefficients are different. Therefore, it may be understood that 0 to $L$ - 1 are exactly traversed for positions of the $L$ non-zero coefficients. For all possible codeword indexes that are traversed, 0 to $L$ - 1 are exactly traversed for positions of $L$ non-zero coefficients, that is, all positions of one codeword are traversed. Therefore, positions of all the non-zero coefficients of the K codewords that are determined from the K codebooks based on the same codeword index may be referred to as being complementary, or the K codebooks may be referred to as complementary codebooks.

In another example, when $L_{nonzero} > L$, $L_{nonzero}$ non-zero coefficients include $L$ non-zero coefficients, and positions of any two non-zero coefficients in positions of the $L$ non-zero coefficients are different.

It should be understood that when $L_{nonzero} > L$, a quantity of all non-zero coefficients of K codewords that are determined from the K codebooks based on a same codeword index is greater than a length $L$ of a codeword. In this case, positions of any two non-zero coefficients in the $L$ non-zero coefficients included in the $L$ non-zero coefficients are different. Therefore, it may be understood that 0 to $L$ - 1 are exactly traversed for the positions of the $L$ non-zero coefficients, but positions of at least two non-zero coefficients are the same. Therefore, positions of the $L_{nonzero}$ non-zero coefficients are not complementary, or are partially complementary.

In other words, the $L_{nonzero}$ non-zero coefficients include $L_{bound}$ non-zero coefficients, and positions of any two non-zero coefficients in positions of the $L_{bound}$ non-zero coefficients are different. $L_{bound} \leq L_{nonzero}$, and $L_{bound}$ is a positive integer.

It may be understood that, when there are two codeword indexes, and quantities of all non-zero coefficients of K codewords that are determined from the K codebooks based on the two codeword indexes are different, it indicates that the K codebooks are not complementary codebooks.

It should be understood that, for all the $L_{nonzero}$ non-zero coefficients included in the K codewords, any non-zero coefficient corresponds to one of the K codewords, and one codeword includes one or more non-zero coefficients. In other words, a position of any non-zero coefficient in positions of all the non-zero coefficients included in the K codewords is a position of the non-zero coefficient in a corresponding codeword.

Optionally, the quantity $L_{nonzero}$ of all the non-zero coefficients may be related to a codeword index j. In this case, a quantity of all non-zero coefficients of K codewords that are determined from the K codebooks based on a $j^{th}$ codeword index may be represented as $L_{nonzero}^{j}$ .

In an example, when $L_{nonzero}^{j} \leq L$ , positions of any two non-zero coefficients in $L_{nonzero}^{j}$ non-zero coefficients are different.

In another example, when $L_{nonzero}^{j} > L$, $L_{nonzero}^{j}$ non-zero coefficients include $L$ non-zero coefficients, and positions (namely, positions in $L$ elements of a codeword) of any two non-zero coefficients in positions of the $L$ non-zero coefficients are different.

It should be noted that the foregoing comparison between $L_{nonzero}$ and $L$ may also be described as follows: When $L_{nonzero} < L$, positions of any two non-zero coefficients in positions of $L_{nonzero}$ non-zero coefficients are different; or when $L_{nonzero} \geq L$, $L_{nonzero}$ non-zero coefficients include L non-zero coefficients, and positions of any two non-zero coefficients in positions of the $L$ non-zero coefficients are different. This is not limited in this application.

Similarly, for comparison between $L_{nonzero}^{j}$ and $L$, refer to the related descriptions of the comparison between $L_{nonzero}$ and $L$. For brevity, details are not described again.

For example, a length of a $k^{th}$ cluster of modulation data in the K clusters of modulation data is related to a quantity of non-zero coefficients included in a codeword corresponding to the $k^{th}$ cluster of modulation data, where k= 0, ... , K - 1. In other words, a quantity of elements in the $k^{th}$ cluster of modulation data is determined based on the quantity of non-zero coefficients included in the codeword corresponding to the $k^{th}$ cluster of modulation data. Refer to the following formula (25). This is because each cluster of modulation data corresponds to one codeword. In this case, a size or a length of each cluster of modulation data adapts to a quantity of non-zero coefficients included in one codeword corresponding to the cluster of modulation data.

FIG. 4 is a diagram of complementary codebooks according to an embodiment of this application. As shown in FIG. 4, K=3 codebooks are included, and numbers of the codebooks are respectively a codebook 0, a codebook 1, and a codebook 2. Each codebook includes N codewords, and numbers of the codewords are respectively a codeword 0, a codeword 1, ..., and a codeword N-1. Quantities $L$ of elements included in all of the codewords are the same, or lengths of the codewords are the same, and L=6. For example, a shadow block in each codeword may be considered as a non-zero element, a white block may be considered as a zero element, and a position of each shadow block in $L$=6 blocks is a position of a non-zero coefficient in the codeword. A value of $L_{nonzero}$ is 6, that is, the three codebooks are complementary codebooks. Optionally, the codeword 0, the codeword 1, ..., the codeword N-2, and the codeword N-1 may be referred to as codeword indexes of corresponding codewords. Therefore, one codeword may be determined from each of the three codebooks based on any codeword index, a quantity $L_{nonzero}$ of all non-zero coefficients of the three codewords is 6, and positions of any two non-zero coefficients in the six non-zero coefficients are different. For example, positions of shadow parts in three codewords that are in the codebook 1, the codebook 1, and the codebook 2 and that correspond to the codeword 0 do not overlap at all. It can be learned that the three codebooks are complementary to each other.

Based on this implementation, the K codebooks are complementary. Extending the K clusters of modulation data based on the K codebooks to determine K clusters of first data, and generating SC-FDMA symbols based on the K clusters of first data may be understood as first generating, based on different clusters of first data, an SC-FDMA symbol corresponding to each cluster of first data, and then combining SC-FDMA symbols to obtain a first symbol, that is, an SC-FDMA symbol. SC-FDMA symbols corresponding to different clusters of first data are complementary and superposed. In other words, energy of an SC-FDMA symbol corresponding to another cluster of first data at a position at which energy of an SC-FDMA symbol corresponding to a cluster of first data is large is small. Therefore, a PAPR of a superposed SC-FDMA symbol is low, and energy of the sending device for sending data can be improved, thereby improving demodulation performance. In addition, K clusters of modulation data of different sending devices may correspond to different K codewords, so that transmission interference between users can be reduced and demodulation performance can be improved.

FIG. 5 is a diagram of partially complementary codebooks according to an embodiment of this application. As shown in FIG. 5, K=3 codebooks are included, and numbers of the codebooks are respectively a codebook 0, a codebook 1, and a codebook 2. Each codebook includes N codewords, and numbers of the codewords are respectively a codeword 0, a codeword 1, ..., and a codeword N-1. Quantities $L$ of elements included in all of the codewords are the same, or lengths of the codewords are the same, and $L$=6. For example, a shadow block in each codeword may be considered as a non-zero element, a white block may be considered as a zero element, and a position of each shadow block in $L$=6 blocks is a position of a non-zero coefficient in the codeword. Optionally, the codeword 0, the codeword 1, ..., the codeword P, the codeword P+1, ..., and the codeword N-1 may be referred to as codeword indexes of corresponding codewords. Therefore, one codeword may be determined from each of the three codebooks based on any codeword index. As shown in FIG. 5, positions of $L_{nonzero}$ non-zero coefficients included in three codewords corresponding to any codeword index in the first (P+1) codeword indexes are related, that is, a quantity of the non-zero coefficients included in the three codewords that are determined based on any codeword index in the first (P+1) codeword indexes is 6, that is, a value of $L_{nonzero}$ is 6, and positions of any two non-zero coefficients in the six non-zero coefficients are different. A quantity of non-zero coefficients included in three codewords corresponding to any codeword index in the last (N-P-1) codeword indexes is 5, that is, a value of $L_{nonzero}$ is 5, and positions of any two non-zero coefficients in the five non-zero coefficients are different. It can be learned that the three codebooks are not complementary, or three codebooks corresponding to any codeword index in a codeword index 0 to a codeword index P are complementary, and three codebooks corresponding to any codeword index in a codeword index P+1 to a codeword N-1 are not complementary (or are partially complementary).

Based on this implementation, the K codebooks are not complementary, but positions of all non-zero elements in $L_{nonzero}$ ($L_{nonzero} < L$) non-zero coefficients are different (that is, positions of any two non-zero coefficients are different). Therefore, it may be understood as that the K codebooks are partially complementary. In this case, SC-FDMA symbols corresponding to different clusters of first data still have partial complementary superposition characteristics. Compared with a design in which there are no constraints between the K codebooks, this can reduce a PAPR obtained through superposition the SC-FDMA symbols corresponding to different clusters of first data. In comparison with the K complementary codebooks shown in FIG. 4, in the K partially complementary codebooks, there is more flexibility, a larger quantity of codewords can be designed, and a scenario in which more sending devices simultaneously transmit data, especially a large-scale access scenario, is supported.

FIG. 6 is a diagram of other partially complementary codebooks according to an embodiment of this application. As shown in FIG. 6, K=3 codebooks are included, and numbers of the codebooks are respectively a codebook 0, a codebook 1, and a codebook 2. Each codebook includes N codewords, and numbers of the codewords are respectively a codeword 0, a codeword 1, ..., and a codeword N-1. Quantities $L$ of elements included in all of the codewords are the same, or lengths of the codewords are the same, and $L$=6. Positions of $L_{nonzero}$ non-zero coefficients included in three codewords corresponding to any codeword index in the first (P+1) codeword indexes are related, that is, a quantity of the non-zero coefficients included in the three codewords that are determined based on any codeword index in the first (P+1) codeword indexes is 6, that is, a value of $L_{nonzero}$ is 6, and positions of any two non-zero coefficients in the six non-zero coefficients are different. A quantity of non-zero coefficients included in three codewords corresponding to any codeword index in the last (N-P-1) codeword indexes is 7, that is, a value of $L_{nonzero}$ is 7, and the seven non-zero coefficients include six non-zero coefficients in which positions of any two non-zero coefficients are different. It can be learned that the three codebooks are not complementary, or three codebooks corresponding to any codeword index in a codeword index 0 to a codeword index P are complementary, and three codebooks corresponding to any codeword index in a codeword index P+1 to a codeword N-1 are not complementary.

Based on this implementation, the K codebooks are not complementary, but $L_{nonzero}$ ($L_{nonzero} > L$) non-zero coefficients include $L$ non-zero coefficients, and positions of the $L$ non-zero coefficients are different (that is, positions of any two non-zero coefficients are different). Therefore, it may be understood as that the K codebooks are partially complementary. In this case, SC-FDMA symbols corresponding to different clusters of first data still have partial complementary superposition characteristics. Compared with a design in which there are no constraints between the K codebooks, this can reduce a PAPR obtained through superposition the SC-FDMA symbols corresponding to different clusters of first data. In comparison with the K complementary codebooks shown in FIG. 4, in the K partially complementary codebooks, there is more flexibility, a larger quantity of codewords can be designed, and a scenario in which more sending devices simultaneously transmit data, especially a large-scale access scenario, is supported.

Optionally, the method 300 further includes: The sending device determines the K codebooks.

In an implementation, the K codebooks may be predefined, configured, or preconfigured, or indicated by signaling.

For example, the receiving device (for example, a base station) sends indication information to the sending device (for example, UE). Correspondingly, the sending device receives the indication information from the receiving device, where the indication information indicates the K codebooks corresponding to the K clusters of modulation data. Optionally, the indication information includes a direct indication or an indirect indication of the first K codebooks.

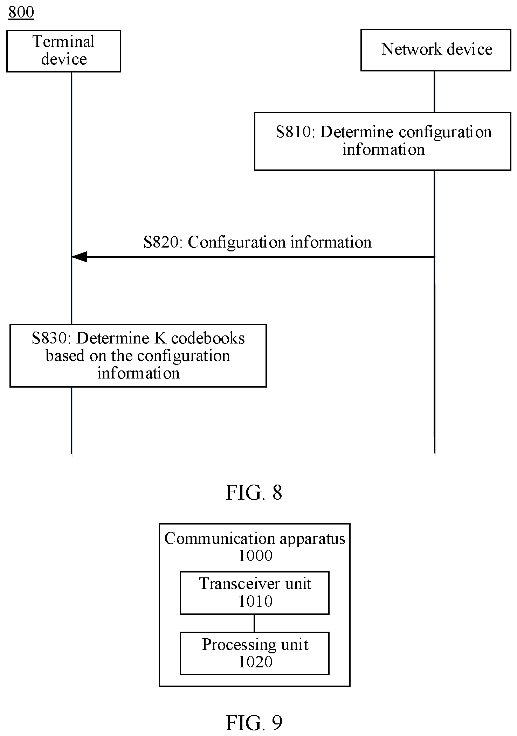

For example, the receiving device sends configuration information to the sending device. Correspondingly, the receiving device receives configuration information from the sending device. The configuration information is used to configure the K codebooks. For a specific implementation, refer to the following descriptions of a method 800 shown in FIG. 8.

For example, there may be a plurality of groups of K codebooks, and each group of K codebooks may be referred to as a codebook set, that is, one codebook set includes K codebooks. The receiving device (for example, a base station) sends indication information to the sending device (for example, UE), where the indication information indicates K codebooks (namely, a group of K codebooks) of a codebook set selected by the sending device.

In this embodiment of this application, quantities of codewords included in all of the K codebooks are the same, and the quantity of codewords is N. Lengths of codewords included in each codebook are the same, and the length of the codeword is L. In other words, quantities of elements included in all of the codewords are the same, that is, the codeword includes L elements. For example, it is assumed that there are three codebooks, each codebook includes 10 codewords, and lengths of all of the codewords (or quantities of elements included in all of the codewords) are the same. For example, if each codeword includes five elements, positions of non-zero coefficients in three codewords that are determined by the sending device are related, or non-zero coefficients in three codewords that are determined by the sending device are complementary.

For example, an $i^{th}$ codebook $S_i$ in the K codebooks satisfies:

$$S_i = \left\{ S_i^0, \ldots, S_i^{N-1} \right\} \qquad (1)$$

$S_i^j$ represents a $j^{th}$ codeword in the $i^{th}$ codebook, $S_i^j = \left[ S_i^j(0), \ldots, S_i^j(L-1) \right]$, L represents a quantity of elements included in the $j^{th}$ codeword, a value of at least one element in the L elements included in $S_i^j$ is 0, $S_i^j(m)$ represents an $m^{th}$ element in the $j^{th}$ codeword, $m = 0, \ldots, L - 1$, i and j are integers, $i = 0, \ldots, K - 1$, and $j = 0, \ldots, N - 1$.

For example, a value of an element in each codeword in each codebook is 0 or 1, or a value of an element in each codeword in each codebook is 0, 1, or -1. For example, a value of $S_i^j(m)$ is 0 or 1, or a value of $S_i^j(m)$ is 0, 1, or -1. This is not limited in this application. It should be understood that a codeword in each codebook in this embodiment of this application is a sparse codeword, that is, any codeword in each codebook has at least one element whose value is 0. In other words, $S_i^j$ in the foregoing formula (1) has at least one element whose value is 0.

S320: The sending device generates the first symbol based on the K codewords and the K clusters of modulation data.

In an implementation, the sending device extends the K clusters of modulation data based on the K codewords, to obtain the K clusters of first data. Further, the sending device generates the first symbol based on the K clusters of first data.

Optionally, the sending device performs Fourier transform on each of the K clusters of first data to obtain K clusters of frequency data, and the sending device generates the first symbol based on the K clusters of frequency data.

Optionally, the sending device performs resource mapping on the K clusters of frequency data and then performs inverse Fourier transform, to generate the first symbol.

It may be understood that the K clusters of modulation data one to one correspond to the K clusters of first data, and the K clusters of modulation data one to one correspond to the K clusters of frequency data.

Extending the K clusters of modulation data based on the K codewords to obtain the K clusters of first data includes: extending the $k^{th}$ cluster of modulation data based on a $(j_{cw,1})^{th}$ codeword in a $k^{th}$ codebook, to obtain a $k^{th}$ cluster of first data, where $j_{cw,1}$ is the first codeword index, the first codeword index is one of the N codeword indexes, the N codeword indexes one to one correspond to the N codewords included in each codebook, $k = 0, \ldots, K - 1$ $j_{cw,1} \in \{0, \ldots, N - 1\}$, and N is a quantity of codewords included in each of the K codebooks.

It should be noted that the K codewords herein are obtained by the sending device by determining one corresponding codeword from each of the K codebooks based on a same codeword index (for example, the first codeword index).

Optionally, the first symbol is an SC-FDMA symbol. It should be understood that the SC-FDMA symbol may be considered as a linear combination of symbols generated based on different modulation data at a same moment. For example, the first symbol is obtained by combining K first sub-symbols, and the K first sub-symbols are generated based on the K clusters of first data.

In this embodiment of this application, the K clusters (clusters) of modulation data may be understood as that first modulation data is split into the K clusters of modulation data. Similarly, the K clusters of first data may be understood as that first data is split into the K clusters of first data. The following uses the K clusters of modulation data as an example for description. When the first modulation data includes K>1 clusters of modulation data, frequency data corresponding to each cluster of modulation data is contiguously mapped, that is, frequency positions to which the frequency data corresponding to each cluster of modulation data is mapped are contiguous. When frequency positions to which different clusters of frequency data corresponding to different clusters of modulation data are mapped do not overlap, the K clusters of modulation data may correspond to K clusters of frequency resources. Similarly, that the frequency position may include K clusters of frequency positions may be understood as that the frequency position is split into the K clusters of frequency positions, and the K clusters of frequency positions one to one correspond to the K clusters of frequency resources. For example, when one frequency position includes K>1 clusters of frequency positions, frequency resources determined based on each cluster of frequency positions are contiguous, and different clusters of frequency resources do not overlap.

It should be understood that the K clusters of frequency positions one to one correspond to the K clusters of modulation data, that is, a $k^{th}$ cluster of frequency positions corresponds to the $k^{th}$ (k=0, ..., or K-1) cluster of modulation data, or frequency data (namely, a $k^{th}$ cluster of frequency data) corresponding to the $k^{th}$ cluster of modulation data is mapped to a $k^{th}$ cluster of frequency resource corresponding to the $k^{th}$ cluster of frequency positions. The $k^{th}$ cluster of frequency positions may include a start position of the $k^{th}$ cluster of frequency data (namely, a start position of a frequency resource to which the $k^{th}$ cluster of frequency data is mapped), an end position of the $k^{th}$ cluster of frequency positions (namely, an end position of the frequency resource to which the $k^{th}$ cluster of frequency data is mapped), or a position of a frequency resource to which each element of the $k^{th}$ cluster of frequency data is mapped.

Optionally, the K clusters of modulation data may be replaced with K modulation data blocks (blocks), K groups (groups) of modulation data, or the like. This is not limited in this application.

Optionally, a quantity K of clusters may be predefined, or may be configured by using higher layer signaling (for example, RRC).

Optionally, a value of the quantity K of clusters may be any one of 2, 3, 4, or 5.

For example, the K clusters of modulation data are obtained by splitting the first modulation data, and the first modulation data is obtained through modulation of bit data. A modulation scheme includes any one of the following: BPSK modulation, Pi/2-BPSK modulation, or QPSK modulation. This is not limited in this application.

For example, the K clusters of modulation data one to one correspond to the K clusters of frequency positions. The K clusters of frequency positions are determined based on a bit-map (bit-map), or the K clusters of frequency positions are determined based on a combinatorial number system (combinatorial number system). That the K clusters of modulation data one to one correspond to the K clusters of frequency positions may be understood as that the K clusters of modulation data are extended based on the K codewords to obtain the K clusters of first data, Fourier transform is performed on each of the K clusters of first data to obtain the K clusters of frequency data, the K clusters of frequency data are mapped to the K clusters of frequency positions one by one, and then inverse Fourier transform is performed, to obtain SC-FDMA symbols.

Optionally, the K clusters of frequency positions are predefined, indicated by higher layer signaling, or indicated by DCI.

The following specifically describes a manner of determining the K clusters of frequency positions based on the bit-map or the combinatorial number system.

In a first implementation, the sending device indicates, in a bit-map manner, positions of frequency resources to which the K clusters of frequency data are mapped, where the K clusters of frequency data are obtained by performing Fourier transform on each of the K clusters of first data

Specifically, the sending device splits an allocable frequency resource into at least one frequency unit based on a frequency unit, and then indicates, in a bit-map manner, positions of frequency units to which the K clusters of frequency data are mapped, to determine positions of subcarriers to which the K clusters of frequency data are mapped.

A bandwidth corresponding to the allocable frequency resource may be a system bandwidth, or may be a bandwidth of a BWP. The sending device may select a part or all of the allocable frequency resource for data transmission. The positions of the subcarriers to which the K clusters of frequency data are mapped may be positions of the subcarriers to which the K clusters of frequency data are mapped and that are in the allocable frequency resource.

For example, when a resource block RB is used as a granularity for representation, the allocable frequency resource may include $N_{sys}^{BW}$ RBs. A quantity of subcarriers included in one resource block is $N_{sc}^{RB}$. Therefore, the allocable frequency resource may include $N_{sys}^{BW} N_{sc}^{RB}$ subcarriers. The sending device may define indexes (or numbers) of the $N_{sys}^{BW} N_{sc}^{RB}$ subcarriers of the allocable frequency resource as 0 to $N_{sys}^{BW} N_{sc}^{RB} - 1$, and the positions of the subcarriers to which the K clusters of frequency data are mapped may be indexes of the subcarriers to which the K clusters of frequency data are mapped and that are in the $N_{sys}^{BW} N_{sc}^{RB}$ subcarriers of the allocable frequency resource.

A frequency unit may include $N_{unit}^{RB}$ RBs, that is, $N_{unit}^{RB} N_{sc}^{RB}$ subcarriers. $N_{unit}^{RB}$ may be predefined, or may be indicated by higher layer signaling. For example, a value of $N_{unit}^{RB}$ may be 2, 3, or 4.

For example, the allocable frequency resource that includes the $N_{sys}^{BW} N_{sc}^{RB}$ subcarriers may be split into $N_{unit}$ frequency units. The positions of the frequency units to which the K clusters of frequency data are mapped are indicated in the bit-map manner. In other words, $N_{unit}$ bits one to one correspond to positions of the $N_{unit}$ frequency units. When a value of an ith (i=0, ..., or $N_{unit}$ - 1) bit in the $N_{unit}$ bits is 1, it indicates that an ith frequency unit in the $N_{unit}$ frequency units is used to map frequency data. Optionally, a 0th bit to a ($N_{unit}$ - 1)th bit in the $N_{unit}$ bits represent a sequence from a low bit to a high bit.

Optionally, a quantity $N_1$ of elements in each cluster of frequency data satisfies: $N_1 / (N_{unit}^{RB} N_{sc}^{RB})$ is a positive integer.

Optionally, positions to which a 0th cluster of frequency data to a (K-1)th cluster of frequency data are mapped are sorted in ascending order of the $N_{unit}$ bits in the bit-map. For example, the allocable frequency resource is 12 RBs, a frequency unit includes one RB, one RB includes 12 subcarriers, and a quantity of bits in the bit-map is 12 bits. A quantity of elements in each cluster of frequency data is 12, that is, one RB, and a quantity K of clusters is 4. Values indicated by the 12 bits in the bit-map from a low bit to a high bit (namely, from a 0th bit to an 11th bit) are 001100100100. In this case, a 0th cluster of frequency data to a 3rd cluster of frequency data are sequentially mapped to a 2nd frequency unit, a 3rd frequency unit, a 6th frequency unit, and a 9th frequency unit.

For example, the allocable frequency resource is 24 RBs, a frequency unit includes one RB, one RB includes 12 subcarriers, and a quantity of bits in the bit-map is 24 bits. A quantity of elements in each cluster of frequency data is 24, that is, two RBs, and a quantity K of clusters is 4. In this case, it can be learned that each cluster of frequency data is mapped to two contiguous frequency units. Values indicated by the 24 bits in the bit-map from a low bit to a high bit (namely, from a 0th bit to a 23rd bit) are 001100110011000001100000. In this case, a 0th cluster of frequency data is mapped to a 2nd frequency unit and a 3rd frequency unit, a 1st cluster of frequency data is mapped to a 6th frequency unit and a 7th frequency unit, a 2nd cluster of frequency data is mapped to a 10th frequency unit and an 11th frequency unit, and a 3rd cluster of frequency data is mapped to a 17th frequency unit and an 18th frequency unit.

Optionally, positions to which the 0th cluster of frequency data to the (K-1)th cluster of frequency data are mapped are sorted in descending order of the $N_{unit}$ bits in the bit-map.

Optionally, each cluster of data corresponds to $N_{unit}$ bits of each of different bit-maps. For example, the sending device may indicate, by using $N_{unit}$ bits, a position of a frequency unit to which the kth cluster of frequency data is mapped, and then indicate, by using $KN_{unit}$ bits, the positions of the frequency units to which the K clusters of frequency data are mapped.

Optionally, the allocable frequency resource including the $N_{sys}^{BW} N_{sc}^{RB}$ subcarriers is split into the $N_{unit}$ frequency units, and quantities of RBs (or quantities of subcarriers) included in all of the $N_{unit}$ frequency units may be different. A quantity of RBs (or a quantity of subcarriers) included in each of the $N_{unit}$ frequency units may be predefined, or may be indicated by higher layer signaling.

Optionally, a bandwidth of each frequency unit is not less than a bandwidth of each cluster of frequency data. In this case, a cluster of frequency data is contiguously mapped in a frequency unit, mapping of the cluster of frequency data may start from a start subcarrier of the frequency unit, and a last element in the cluster of frequency data may be mapped to a last subcarrier of the frequency unit.

In a second implementation, the sending device determines, based on the combinatorial number system, positions of frequency resources to which the K clusters of frequency data are mapped.

Based on the definitions of the allocable frequency domain resource and the frequency unit in the foregoing example, the sending device may determine, based on the combinatorial number system, positions of frequency units to which the K clusters of frequency data are mapped.

Optionally, the sending device determines a start frequency unit position and an end frequency unit position to which each of the K clusters of frequency data is mapped. A start frequency unit position of a $k^{th}$ cluster of frequency positions to which a $k^{th}$ cluster of frequency data is mapped is represented as $s_{2k}$, and an end frequency unit position of the $k^{th}$ cluster of frequency positions to which the $k^{th}$ cluster of frequency data is mapped is represented as $S_{2k+1}-1$.

It may be understood that the sending device determines 2K positions (K start frequency unit positions and K end frequency unit positions) from $N_{unit}$ frequency units.

Optionally, the K clusters of frequency data are sequentially mapped from a subcarrier with a smaller index to a subcarrier with a larger index, that is, satisfy:

$$S_{2K-1} > S_{2K-2} > \cdots > s_1 > s_0 \qquad (2)$$

Optionally, $s_0 \geq 0$.

Optionally, the sending device may indicate the 2K positions by using signaling (for example, RRC), and a quantity of bits included in the signaling is $\left\lceil \log_2\binom{N_{unit}}{2K} \right\rceil$. $\lceil \ \rceil$ represents a round-up function, for example, $\lceil 3.1 \rceil = 4$, and $\lceil 3 \rceil = 3$, $\binom{A}{B}$ represents a quantity of possible combinations of B different values obtained from A different values (that is, the obtained B different values form a combination), and $\binom{0}{B} = 0$. Specifically, the 2K positions may form a combination $< s_0, ..., s_{2K-1} >$, and a relationship between a value (represented as $I_{idx}$) indicated by the signaling and the 2K positions satisfies:

$$I_{idx} = \sum_{k=0}^{2K-1}\binom{s_k}{k+1} = \binom{s_{2K-1}}{2K} + \cdots + \binom{s_0}{1} \qquad (3)$$

or

$$I_{idx} = \sum_{k=0}^{2K-1}\binom{N_{unit}-s_k}{2K-k} = \binom{N_{unit}-s_{2K-1}}{1} + \cdots + \binom{N_{unit}-s_0}{2K} \qquad (4)$$

All of the clusters of frequency data have a same bandwidth. For example, each cluster of frequency data includes $N_1$ subcarriers.

Optionally, a value of $s_k$ is an integer from 0 to $N_{unit}$ - 1.

Optionally, the sending device determines the start frequency unit position to which each of the K clusters of frequency data is mapped and an end frequency unit position of any cluster of frequency data, to determine the positions of the frequency resources to which the K clusters of frequency data are mapped. Because all of the clusters of frequency data have the same bandwidth, a bandwidth of each cluster of frequency data may be determined based on a start frequency unit position and the end frequency unit position of any cluster of frequency data, and then an end frequency unit position of other frequency data is determined based on a start frequency unit position of the other frequency data.

The positions of the frequency resources to which the K clusters of frequency data are mapped are determined based on the start frequency unit position to which each of the K clusters of frequency data is mapped and the end frequency unit position of any cluster of frequency data, and the positions do not overlap.

It may be understood that the sending device determines (K+1) positions (K start frequency unit positions and one end frequency unit position) from the $N_{unit}$ frequency units.

For example, the sending device determines the start frequency unit position to which each of the K clusters of frequency data is mapped and an end frequency unit position of a $0^{th}$ cluster of frequency data, where start frequency unit positions of the $0^{th}$ cluster of frequency data to a $(K-1)^{th}$ cluster of frequency data are respectively represented as $w_0$, $w_2$, $w_3$, ... , $w_K$, and the end frequency unit position to which the $0^{th}$ cluster of frequency data is mapped is represented as $w_1$.

Optionally, the K clusters of frequency data are sequentially mapped from a subcarrier with a smaller index to a subcarrier with a larger index, that is, satisfy:

$$w_K > \cdots > w_1 > w_0.$$

Optionally, the sending device may indicate the (K+1) positions by using signaling (for example, RRC), and a quantity of bits included in the signaling is $\left\lceil \log_2\binom{N_{unit}}{K+1} \right\rceil$. $\lceil \ \rceil$ represents a round-up function, for example, $\lceil 3.1 \rceil = 4$, and $\lceil 3 \rceil = 3$, $\binom{A}{B}$ represents a quantity of possible combinations of B different values obtained from A different values (that is, the obtained B different values form a combination), and $\binom{0}{B} = 0$. Specifically, the (K+1) positions may form a combination $< w_0, w_1, ..., w_K >$, and a relationship between a value (represented as $I_{idx}$) indicated by the signaling and the (K+1) positions satisfies:

$$I_{idx} = \sum_{k=0}^{K}\binom{w_k}{k+1} = \binom{w_K}{K+1} + \cdots + \binom{w_0}{1} \qquad (5)$$

or

$$I_{idx} = \sum_{k=0}^{K}\binom{N_{unit}-w_k}{K+1-k} = \binom{N_{unit}-w_K}{1} + \cdots + \binom{N_{unit}-w_0}{K+1} \qquad (6)$$

For example, the sending device determines the start frequency unit position to which each of the K clusters of frequency data is mapped and an end frequency unit position of a (K-1)$^{th}$ cluster of frequency data, where start frequency unit positions of a 0$^{th}$ cluster of frequency data to the (K-1)$^{th}$ cluster of frequency data are respectively represented as $w_0$, $w_1$, $w_2$, ..., $w_{K-1}$, and the end frequency unit position to which the (K-1)$^{th}$ cluster of frequency data is mapped is represented as $w_K$. The relationship between the value indicated by the signaling and the (K+1) positions satisfies Formula (5).

The following specifically describes codebook hopping and/or codeword hopping of the K clusters of modulation data.

For example, the base station may indicate, to the UE by using indication information (for example, RRC or DCI signaling), whether to perform codebook hopping. For example, 1-bit signaling is used. When a value of a bit is 1, it indicates that codebook hopping is enabled; or when a value of a bit is 0, it indicates that codebook hopping is not enabled.

For example, the base station may indicate, to the UE by using indication information (for example, RRC or DCI signaling), whether to perform codeword hopping. For example, 1-bit signaling is used. When a value of a bit is 1, it indicates that codeword hopping is enabled; or when a value of a bit is 0, it indicates that codeword hopping is not enabled.

In a first implementation, a (k')$^{th}$ cluster of modulation data in the K clusters of modulation data corresponds to a (k")$^{th}$ codebook in the K codebooks, where a codebook index of the (k")$^{th}$ codebook is determined based on the identifier of the sending device, k' = 0, ..., K - 1, and k" = 0, ..., K - 1.

Optionally, codebooks corresponding to different clusters of modulation data may be determined based on the identifier of the sending device. Specifically, the codebook index of the (k")$^{th}$ codebook corresponding to the (k')$^{th}$ cluster of modulation data may be determined based on the identifier of the sending device.

Optionally, the codebook index of the (k")$^{th}$ codebook corresponding to the (k')$^{th}$ cluster of modulation data may be determined based on the identifier of the sending device and a cluster index k'.

Optionally, the codebook index of the (k")$^{th}$ codebook corresponding to the (k')$^{th}$ cluster of modulation data may be determined based on the identifier of the sending device, a cluster index k', and a time domain position of the data.

For example, the sending device sends data in at least one symbol, for example, an SC-FDMA symbol.

Optionally, the time domain position of the data may be an index of a symbol or an index of a slot. For example, when transmitting data in $L_{symb} > 1$ symbols, the sending device may determine an index of a codebook corresponding to the (k')$^{th}$ cluster of modulation data based on the identifier of the sending device, the cluster index k', and indexes of the symbols. For another example, when transmitting data in $N_{slot} > 1$ slots, the sending device may determine an index of a codebook corresponding to the (k')$^{th}$ cluster of modulation data based on the identifier of the sending device, the cluster index k', and indexes of the slots. For another example, when transmitting data in $N_{slot} > 1$ slots, the sending device may determine an index of a codebook corresponding to the (k')$^{th}$ cluster of modulation data based on the identifier of the sending device, the cluster index k', an index of a symbol, and indexes of the slots.

For example, the codebook index k" may be represented as:

$$k'' = \left(n_{ID}^{hop} * \Delta_{hop,1} + \Delta_{hop,2}l_{symb} + \Delta_{hop,3}n_s + \Delta_{hop,4} + k'\right) \bmod K \qquad (7)$$

or

$$k'' = \left(n_{ID}^{hop} * \Delta_{hop,1} + \Delta_{hop,2}l_{symb} + \Delta_{hop,4} + k'\right) \bmod K \qquad (8)$$

or

$$k'' = \left(n_{ID}^{hop} * \Delta_{hop,1} + \Delta_{hop,3}n_s + \Delta_{hop,4} + k'\right) \bmod K \qquad (9)$$

$n_{ID}^{hop}$ represents the identifier of the sending device, $l_{symb}$ represents an index of a symbol, $n_s$ represents an index of a slot, and $\Delta_{hop,1}$, $\Delta_{hop,2}$, $\Delta_{nop,3}$, and $\Delta_{hop,4}$ are offsets. $\Delta_{hop,1}$, $\Delta_{hop,2}$, $\Delta_{hop,3}$, and $\Delta_{hop,4}$ may be predefined or indicated by signaling.

Optionally, the index of the codebook corresponding to the $(k')^{th}$ cluster of modulation data may be determined based on a pseudo-random sequence, where initialization of the pseudo-random sequence is determined based on the identifier of the sending device.

For example, the codebook index k" may be represented as:

$$k'' = \left(f_{cb,hop} + \Delta_{hop,1} + k'\right) \bmod K \qquad (10)$$

or

$$k'' = \left(f_{cb,hop} + n_{ID}^{hop} + \Delta_{hop,1} + k'\right) \bmod K \qquad (11)$$

$f_{cb,hop}$ is obtained based on the pseudo-random sequence.

For example, $f_{cb,hop}$ may be represented as:

$$f_{cb,hop} = \left[\sum_{i=0}^{M_{bit}-1} 2^i * c(\Delta_{bit,1} * n_s + \Delta_{bit,2} * l_{symb} + \Delta_{bit,3} + i)\right] \bmod K \qquad (12)$$

or

$$f_{cb,hop} = \left[\sum_{i=0}^{M_{bit}-1} 2^i * c(\Delta_{bit,1} * n_s + \Delta_{bit,3} + i)\right] \bmod K \qquad (13)$$

or

$$f_{cb,hop} = \left[\sum_{i=0}^{M_{bit}-1} 2^i * c(\Delta_{bit,2} * l_{symb} + \Delta_{bit,3} + i)\right] \bmod K \qquad (14)$$

$M_{bit}$ is an integer, and may be predefined. $\Delta_{bit,1}$, $\Delta_{bit,2}$, and $\Delta_{bit,3}$ are offsets, and may be predefined or indicated by signaling. $c(\Delta_{bit,1} * n_s + \Delta_{bit,2} * l_{symb} + \Delta_{bit,3} + i)$ represents a $(\Delta_{bit,1} * n_s + \Delta_{bit,2} * l_{symb} + \Delta_{bit,3} + i)^{th}$ value of the pseudo-random sequence.

For example, an initialized value $c_{init}$ of the pseudo-random sequence may be represented as:

$$c_{init} = n_{ID}^{hop} \qquad (15)$$

or

$$c_{init} = n_{ID}^{hop} + n_{ID}^{conf} \qquad (16)$$

$n_{ID}^{conf}$ may be an identifier of a cell, or may be indicated by signaling.

In a second implementation, a $(k')^{th}$ cluster of modulation data in the K clusters of modulation data corresponds to a $(j_{cw,1})^{th}$ codeword in a $(k'')^{th}$ codebook in the K codebooks, $j_{cw,1}$ is the first codeword index, the first codeword index is one of the N codeword indexes, and the N codeword indexes one to one correspond to the N codewords included in each codebook. The first codeword index is determined based on the identifier of the sending device, k' = 0, ..., K - 1, k" = 0, ..., K - 1, and $j_{cw,1} \in \{0, ... , N - 1\}$.

Optionally, a same codeword index corresponding to different clusters of modulation data may be determined based on the identifier of the sending device, that is, a codeword index corresponding to the K clusters of modulation data may be determined based on the identifier of the sending device.

Optionally, the same codeword index corresponding to different clusters of modulation data is irrelevant to a cluster index k'.

Optionally, the same codeword index corresponding to different clusters of modulation data may be determined based on the identifier of the sending device and a time domain position of the data. For example, when transmitting data in

$L_{symb}$ > 1 symbols, the sending device may determine the codeword index corresponding to the K clusters of modulation data based on the identifier of the sending device and indexes of the symbols. For another example, when transmitting data in $N_{slot}$ > 1 slots, the sending device may determine the codeword index corresponding to the K clusters of modulation data based on the identifier of the sending device and indexes of the slots. For another example, when transmitting data in $N_{slot}$ > 1 slots, the sending device may determine the codeword index corresponding to the K clusters of modulation data based on the identifier of the sending device, an index of a symbol, and indexes of the slots.

For example, the first codeword index $j_{cw,1}$ may be represented as:

$$j_{cw,1} = \left(n_{ID}^{hop} * \Delta_{hop,1} + \Delta_{hop,2} l_{symb} + \Delta_{hop,3} n_s + \Delta_{hop,4}\right) \bmod N \qquad (17)$$

or

$$j_{cw,1} = \left(n_{ID}^{hop} * \Delta_{hop,1} + \Delta_{hop,2} l_{symb} + \Delta_{hop,4}\right) \bmod N \qquad (18)$$

or

$$j_{cw,1} = \left(n_{ID}^{hop} * \Delta_{hop,1} + \Delta_{hop,3} n_s + \Delta_{hop,4}\right) \bmod N \qquad (19)$$

$n_{ID}^{hop}$ represents the identifier of the sending device, $l_{symb}$ represents an index of a symbol, $n_s$ represents an index of a slot, and $\Delta_{hop,1}$, $\Delta_{hop,2}$, $\Delta_{hop,3}$, and $\Delta_{hop,4}$ are offsets. $\Delta_{hop,1}$, $\Delta_{hop,2}$, $\Delta_{hop,3}$, and $\Delta_{hop,4}$ may be predefined or indicated by signaling.

Optionally, the codeword index corresponding to the (k')th cluster of modulation data may be determined based on a pseudo-random sequence, where initialization of the pseudo-random sequence is determined based on the identifier of the sending device.

For example, the first codeword index $j_{cw,1}$ may be represented as:

$$j_{cw,1} = \left(f_{cw,hop} + \Delta_{hop,1}\right) \bmod N \qquad (20)$$

or

$$j_{cw,1} = \left(f_{cw,hop} + n_{ID}^{hop} + \Delta_{hop,1}\right) \bmod N \qquad (21)$$

$f_{cw,hop}$ is obtained based on the pseudo-random sequence.

For example, $f_{cw,hop}$ may be represented as:

$$f_{cw,hop} = \left[\sum_{i=0}^{M_{bit}-1} 2^i * c(\Delta_{bit,1} * n_s + \Delta_{bit,2} * l_{symb} + \Delta_{bit,3} + i)\right] \bmod N \qquad (22)$$

or

$$f_{cw,hop} = \left[\sum_{i=0}^{M_{bit}-1} 2^i * c(\Delta_{bit,1} * n_s + \Delta_{bit,3} + i)\right] \bmod N \qquad (23)$$

or

$$f_{cw,hop} = \left[\sum_{i=0}^{M_{bit}-1} 2^i * c(\Delta_{bit,2} * l_{symb} + \Delta_{bit,3} + i)\right] \bmod N \qquad (24)$$

$M_{bit}$ is an integer, and may be predefined. $\Delta_{bit,1}$, $\Delta_{bit,2}$, and $\Delta_{bit,3}$ are offsets, and may be predefined or indicated by signaling. $c(\Delta_{bit,1} * n_s + \Delta_{bit,2} * l_{symb} + \Delta_{bit,3} + i)$ represents a $(\Delta_{bit,1} * n_s + \Delta_{bit,2} * l_{symb} + \Delta_{bit,3} + i)$th value of the pseudo-random sequence.

For initialization of the pseudo-random sequence, refer to initialization of the pseudo-random sequence in codebook hopping. Details are not described herein again.

Based on the solution, the sending device may perform codebook hopping and codeword hopping based on the identifier of the sending device. When a plurality of sending devices send data on a same segment of time-frequency resources, because codebook hopping and/or codeword hopping patterns (patterns) selected by different sending devices are different, interference between data sent by different sending devices may be randomized, thereby improving demodulation performance of the receiving device.

S330: The sending device sends the first symbol to the receiving device, and correspondingly, the receiving device receives the first symbol from the sending device.

In this embodiment of this application, that the sending device sends the first symbol to the receiving device may be understood as that a destination end of the first symbol is the receiving device, and may include that the sending device directly or indirectly sends the first symbol to the receiving device. Similarly, that the receiving device receives a first signal from the sending device, or that the receiving device receives information from the sending device may be understood as that a source end of the first signal is the sending device, and may include that the receiving device directly or indirectly receives the first signal from the sending device. Optionally, the first signal may undergo necessary processing, for example, a format change, between the source end for sending the first signal and a destination end, or the first signal may be forwarded or transparently transmitted by one or more devices (for example, a relay device, a terminal device, or a network device) between the source end for sending the first signal and the destination end. However, it should be understood that the destination end may understand valid information from the source end.

For example, an uplink communication scenario in a grant-free system is used as an example. The sending device is UE 1, and the receiving device is a base station #1. In this case, the UE 1 may directly send the first signal to the base station #1, or may send the first signal to the base station #1 through another device, for example, UE 2 or a base station #2. This is not limited in this application.

S340: The receiving device determines the K codewords.

For a specific implementation of determining the K codewords by the receiving device, refer to the related descriptions in step S310. For brevity, details are not described herein again.

It should be noted that a sequence of performing step S330 and step S340 is not limited in this application. In other words, the receiving device may determine the K codewords after or before receiving the first symbol.

S350: The receiving device determines the K clusters of modulation data based on the first symbol and the K codewords.

For example, the receiving device sequentially performs Fourier transform, resource demapping, and inverse Fourier transform on the first symbol, to obtain the K clusters of first data. For a specific implementation of sequentially performing Fourier transform, resource demapping, and inverse Fourier transform on the first symbol, refer to an existing protocol. Details are not described herein.

Further, the receiving device may de-extend the K clusters of first data based on the K codewords to obtain the K clusters of modulation data, and combine the K clusters of modulation data to obtain the first modulation data.

FIG. 7 is a schematic flowchart of a first symbol generation method according to an embodiment of this application. An example in which a sending device is an execution body is used. As shown in FIG. 7, the following plurality of steps are included. For details, refer to the related descriptions in FIG. 3 to FIG. 6.

S710: Generate first modulation data through modulation of bit data.

For example, the first modulation data is generated by using the bit data based on a modulation scheme, for example, Pi/2-BPSK modulation, BPSK modulation, or QPSK modulation. The bit data may be determined based on a service of the sending device, or the bit data may be data obtained through encoding. This is not limited in this application.

S720: Split (split) the first modulation data to obtain K clusters of modulation data.

For example, the first modulation data is represented as $d_1$, and the first modulation data includes $N_{1,qam}$ elements, which may also be referred to as the first modulation data including $N_{1,qam}$ modulation symbols. A kth (k=0, ..., K-1) cluster of modulation data in the K clusters of modulation data is represented as $d_k^{Cluster}$.

A length or a size of the kth cluster of modulation data in the K clusters of modulation data is related to a codeword that is determined based on a first codeword index and that is used by the kth cluster of modulation data, for example, is related to a quantity of non-zero coefficients included in the used $(j_{cw,1})$th codeword.

For ease of description, the following describes a first symbol generation in this application by using an example in which the kth cluster of modulation data corresponds to a kth codebook.

For example, the kth cluster of modulation data corresponds to the kth codebook, and a quantity $N_C^k$ of elements included in the kth cluster of modulation data is:

$$N_C^k = \frac{N_{nonzero}^{k,j_{cw,1}} N_1}{L} \qquad (25)$$

$N_1$ represents a quantity of elements included in each cluster of first data, $j_{cw,1}$ is an index, that is, the first codeword index, of a codeword that is in the k<sup>th</sup> codebook and that is used to generate a k<sup>th</sup> cluster of first data, and $N_{nonzero}^{k,j_{cw,1}}$ is a quantity of non-zero elements included in a $(j_{cw,1})^{th}$ codeword in the k<sup>th</sup> codebook. Optionally, $N_1/L$ is an integer.

It may be understood that, when a (k')<sup>th</sup> cluster of modulation data corresponds to a (k")<sup>th</sup> codebook in the K codebooks, a quantity $N_C^k$ of elements included in the (k')<sup>th</sup> cluster of modulation data is:

$$N_C^{k'} = \frac{N_{nonzero}^{k'',j_{cw,1}} N_1}{L} \qquad (26)$$

In an implementation, that the sending device sequentially splits the first modulation data into the K clusters of modulation data satisfies:

$$d_k^{Cluster}(n) = d_1\left(\sum_{p=-1}^{k-1} N_C^p + n\right), n = 0, \dots, N_C^k - 1 \qquad (27)$$

$d_k^{Cluster}(n)$ represents an n<sup>th</sup> element corresponding to the k<sup>th</sup> cluster of modulation data, and $N_C^{-1} = 0$.

S730: Extend the K clusters of modulation data based on K codewords, to determine K clusters of first data.

In an implementation, the sending device determines the K codewords from K codebooks based on a same index (namely, the first codeword index $j_{cw,1}$), and extends the K clusters of modulation data by using the K codewords, to obtain the K clusters of first data. For example, the sending device extends a k<sup>th</sup> cluster of modulation data based on a $(j_{cw,1})^{th}$ codeword in a k<sup>th</sup> codebook, to obtain a k<sup>th</sup> cluster of first data.

For example, the k<sup>th</sup> cluster of modulation data corresponds to the k<sup>th</sup> codebook. Optionally, $N_C^k$ elements of the k<sup>th</sup> cluster of modulation data may be split into $N_1/L$ groups of modulation data, where each group of modulation data includes $N_{nonzero}^{k,j_{cw,1}}$ elements, that is, $N_{nonzero}^{k,j_{cw,1}}$ modulation symbols; and the k<sup>th</sup> cluster of first data may be split into $N_1/L$ groups of first data, where each group of first data includes L elements. A p<sup>th</sup> group of first data corresponds to a p<sup>th</sup> group of modulation data, that is, the p<sup>th</sup> group of first data is obtained based on the p<sup>th</sup> group of modulation data, and p = 0, ..., $N_1/L$ - 1.

Optionally, when an element value of a codeword is 0 or 1, the k<sup>th</sup> cluster of modulation data is extended based on the $(j_{cw,1})^{th}$ codeword in the k<sup>th</sup> codebook, indicating that the p<sup>th</sup> group of modulation data is sequentially mapped to positions of non-zero elements in the $(j_{cw,1})^{th}$ codeword to obtain the p<sup>th</sup> group of first data.

Optionally, when an element value of a codeword is 0 or non-zero, the k<sup>th</sup> cluster of modulation data is extended based on the $(j_{cw,1})^{th}$ codeword in the k<sup>th</sup> codebook, indicating that the p<sup>th</sup> group of modulation data is sequentially mapped to positions of non-zero elements in the $(j_{cw,1})^{th}$ codeword, and is multiplied by the non-zero elements at the mapped positions, to obtain the p<sup>th</sup> group of first data.

For example, assuming that the k<sup>th</sup> cluster of first data is represented as $x_k$, and the k<sup>th</sup> cluster of first data includes $N_1$ elements, the k<sup>th</sup> cluster of first data obtained through extension and the k<sup>th</sup> cluster of modulation data satisfy:

$$x_k\left(pL + I_k^{j_{cw,1}}(q)\right) = S_k^{j_{cw,1}}\left(I_k^{j_{cw,1}}(q)\right) \times d_k^{Cluster}\left(pN_{nonzero}^{k,j_{cw,1}} + q\right) \qquad (28)$$

$q = 0, \dots, N_{nonzero}^{k,j_{cw,1}} - 1$, $p = 0, \dots, N_1/L$ - 1, $S_k^{j_{cw,1}}$ represents the $(j_{cw,1})^{th}$ codeword in the k<sup>th</sup> codebook, $I_k^{j_{cw,1}}$ represents positions of non-zero elements in the $(j_{cw,1})^{th}$ codeword $S_k^{j_{cw,1}}$ in the k<sup>th</sup> codebook, $N_1/L$ is an integer, and an element at another position in $x_k$ is 0.

Optionally, when values of the non-zero elements in the $(j_{cw,1})^{th}$ codeword in the k<sup>th</sup> codebook are 1, the k<sup>th</sup> cluster of first data obtained through extension and the k<sup>th</sup> cluster of modulation data satisfy:

$$x_k\left(pL + I_k^{j_{cw,1}}(q)\right) = d_k^{Cluster}\left(pN_{nonzero}^{k,j_{cw,1}} + q\right) \qquad (29)$$

$q = 0, \dots, N_{nonzero}^{k,j_{cw,1}} - 1$, $p = 0, \dots, N_1/L$ - 1, $S_k^{j_{cw,1}}$ represents the $(j_{cw,1})^{th}$ codeword in the k<sup>th</sup> codebook, $I_k^{j_{cw,1}}$ represents positions of non-zero elements in the $(j_{cw,1})^{th}$ codeword $S_k^{j_{cw,1}}$ in the $k^{th}$ codebook, $N_1/L$ is an integer, and an element at another position in $x_k$ is 0.

S740: Perform Fourier transform on each of the K clusters of first data, to obtain K clusters of frequency data.

For example, a $k^{th}$ cluster of frequency data is represented as $x_k$, and satisfies:

$$X_k(m) = \frac{1}{\sqrt{N_1}} \sum_{i=0}^{N_1-1} x_k(i) e^{-j\frac{2\pi i m}{N_1}} \qquad (30)$$

m = 0, ..., $N_1$ - 1, $X_k(m)$ represents an $m^{th}$ element of the $k^{th}$ cluster of frequency data, and $X_k = [X_k(0), ... , X_k(N_1 - 1)]$.

S750: Perform resource mapping on the K clusters of frequency data and then perform inverse Fourier transform, to generate an SC-FDMA symbol.

For example, the K clusters of frequency data are mapped to corresponding frequency resources through resource mapping. It should be understood that, when each cluster of frequency data is mapped to a contiguous frequency resource, frequency resources to which different clusters of data are mapped do not overlap.

For example, it is assumed that data obtained by sequentially splicing the K clusters of frequency data is represented as X, that is, $X = [X_0, ... , X_{K-1}]$, and X includes $KN_1$ elements. A position of a frequency resource to which the $k^{th}$ cluster of frequency data is mapped is represented as $A_k$, and a result obtained by sequentially splicing positions of the frequency resources to which the K clusters of frequency data are mapped is represented as: $A = [A_0, ..., A_{K-1}]$, where values of any two elements in A are different.

It may be understood that the positions of the frequency resources correspond to the frequency resources.

Optionally, the positions of the frequency resources to which the K clusters of frequency data are mapped may be positions of subcarriers to which the K clusters of frequency data are mapped. $N_1$ elements of each cluster of frequency data are mapped to $N_1$ subcarriers, where one element is mapped to one subcarrier (that is, one element corresponds to one subcarrier). In this case, the position of the frequency resource to which the $k^{th}$ cluster of frequency data is mapped indicates positions of $N_1$ subcarriers to which the $k^{th}$ cluster of frequency data is mapped, and $A_k$ includes $N_1$ elements.

Optionally, an $m^{th}$ element $A_k(m)$ in $A_k$ corresponds to a position of a subcarrier to which the $m^{th}$ element of the $k^{th}$ cluster of frequency data is mapped.

For example, the sending device determines the positions of the frequency resources to which the K clusters of frequency data are mapped, that is, determines each element in A.

Optionally, the positions of the frequency resources to which the K clusters of frequency data are mapped are predefined, are indicated by higher layer signaling, or are indicated by DCI.

The positions of the frequency resources to which the K clusters of frequency data are mapped may be indicated in a bit-map manner, or may be determined based on a combinatorial number system. For a specific implementation, refer to the related descriptions of the foregoing method 300. Details are not described herein again.

Further, the sending device performs inverse Fourier transform on the K clusters of frequency data (the mapped positions A) obtained through resource mapping, to generate the SC-FDMA symbols. For a specific implementation, refer to a process of performing inverse Fourier transform processing in an LTE system or an NR system. This is not limited in this application.

According to the solution provided in this application, a first symbol with a PAPR is generated based on the K codewords and the K clusters of modulation data. Positions of non-zero coefficients included in the K codewords are related, so that a possibility that a conflict occurs during signal transmission by a sending device can be reduced, and demodulation performance of a receiving device can also be improved.

FIG. 8 is a schematic flowchart of a communication method 800 according to an embodiment of this application. As shown in FIG. 8, a case in which a network device (for example, the receiving device in the method 300) configures K codebooks for a terminal device (for example, the sending device in the method 300) is specifically described. The method may be a further detailed implementation of "determining the K codebooks by the sending device" in the method 300. A procedure of the method may be performed by the network device and the terminal device, or may be performed by a module and/or a component (for example, a chip or an integrated circuit) that are/is installed in the network device and the terminal device and that have/has corresponding functions. This is not limited in this application. The following uses the network device and the terminal device as execution bodies for description, and a plurality of following steps are included. It should be understood that the related descriptions in embodiments shown in FIG. 3 and FIG. 7 are also applicable to this implementation. A same or similar technical means may exist among FIG. 3, FIG. 7, and FIG. 8. Content in FIG. 8 that has been described in the embodiment in FIG. 3 and the embodiment in FIG. 7 is not described again.

S810: The network device determines configuration information.

The configuration information indicates K codebooks, and the configuration information includes a quantity of the K codebooks, a length of each codeword, a value of an element included in each codebook, and the like. As shown in FIG. 4, K=3, and a length L of each codeword is equal to 6, or each codeword includes six elements. For example, three codewords are determined from three codebooks based on a codeword 0. Values of elements included in a codeword that corresponds to the codeword 0 and that is in a codebook 0 are 1, 0, 1, 0, 1, and 0 in sequence. Values of elements included in a codeword that corresponds to the codeword 0 and that is in a codebook 1 are 0, 1, 0, 0, 0, and 1 in sequence. Values of elements included in a codeword that corresponds to the codeword 0 and that is in a codebook 2 are 0, 0, 0, 1, 0, and 0 in sequence. A resource position corresponding to an element whose value is 1 is a data mapping position.

In this embodiment of this application, the K codebooks are different from each other.

S820: The network device sends the configuration information to the terminal device, and correspondingly, the terminal device receives the configuration information from the network device.

S830: The terminal device determines the K codebooks based on the configuration information.

For example, the terminal device determines the K codebooks based on the obtained configuration information, for example, the quantity K of codebooks is 3, and the length L of each codeword is 6, or each codeword includes six elements. For example, three codewords are determined from three codebooks based on a codeword 0. Values of elements included in a codeword that corresponds to the codeword 0 and that is in a codebook 0 are 1, 0, 1, 0, 1, and 0 in sequence. Values of elements included in a codeword that corresponds to the codeword 0 and that is in a codebook 1 are 0, 1, 0, 0, 0, and 1 in sequence. Values of elements included in a codeword that corresponds to the codeword 0 and that is in a codebook 2 are 0, 0, 0, 1, 0, and 0 in sequence. Therefore, the codebook shown in FIG. 4 may be determined.

Optionally, a quantity of groups of codebooks is not limited in this application. For example, there may be one or more groups of K codebooks.

For example, when there is only one group of K codebooks, the K codebooks may be determined by using the foregoing step S810 to step S830. In other words, the network device configures the K codebooks for the terminal device by using the configuration information, or the K codebooks are indicated by signaling. Optionally, the K codebooks may alternatively be predefined or preconfigured. For example, if the K codebooks are configured before delivery of the terminal device, no signaling indication is needed.

For another example, when there are a plurality of groups of K codebooks, for example, two groups, the two groups of K codebooks may be predefined, configured, or preconfigured, or indicated by signaling. In this case, the network device may send indication information to indicate, to the terminal device, that one group of K codebooks is used for data transmission, and the network device indicates, to the terminal device, a correspondence between the K clusters of modulation data and the K codebooks (or K codebook indexes), so that the terminal device can perform data mapping based on the determined K codebooks.

Optionally, for the plurality of groups of K codebooks, before sending the indication information to the terminal device, the network device may consider a transmission requirement of the terminal device and a capability of the terminal device, to select the K adapted codebooks for data transmission. For example, it is assumed that a capability of a UE 1 is low. When selecting the K codebooks for configuration, the network device may preferentially consider selecting a group of K codebooks with a small codebook bandwidth, simple modulation, and elements whose values are only 0 and 1 and that are included in a codeword for the UE 1 to use. This is not limited in this application.

The foregoing describes in detail embodiments on a communication method side in this application with reference to FIG. 1 to FIG. 8. The following describes in detail embodiments on a communication apparatus side in this application with reference to FIG. 9 to FIG. 11. It should be understood that descriptions of the apparatus embodiments correspond to the descriptions of the method embodiments, and therefore for a part that is not described in detail, refer to the foregoing method embodiments.

FIG. 9 is a block diagram of a communication apparatus 1000 according to an embodiment of this application. As shown in FIG. 9, the communication apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the communication apparatus 1000 may implement steps or procedures that is performed by the sending device and that correspond to the foregoing method embodiments. The processing unit 1020 is configured to perform a processing-related operation of the sending device in the foregoing method embodiments, and the transceiver unit 1010 is configured to perform a receiving/sending-related operation of the sending device in the foregoing method embodiments.

In another possible design, the communication apparatus 1000 may implement steps or procedures that is performed by the receiving device and that correspond to the foregoing method embodiments. The processing unit 1020 is configured to perform a processing-related operation of the receiving device in the foregoing method embodiments, and the transceiver unit 1010 is configured to perform a receiving/sending-related operation of the receiving device in the foregoing method embodiments.

It should be understood that the communication apparatus 1000 herein is embodied in a form of a functional unit. The term "unit" herein may refer to an application specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the communication apparatus 1000 may be specifically the transmit end in the foregoing embodiments, and may be configured to perform procedures and/or steps corresponding to the transmit end in the foregoing method embodiments. Alternatively, the apparatus 1000 may be specifically the receive end in the foregoing embodiments, and may be configured to perform procedures and/or steps corresponding to the receive end in the foregoing method embodiments. To avoid repetition, details are not described herein again.

The apparatus 1000 in the foregoing solutions has a function of implementing corresponding steps performed by the transmit end in the foregoing methods, or the apparatus 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmit machine, and a receiving unit in the transceiver unit may be replaced by a receive machine), and another unit, for example, the processing unit, may be replaced by a processor, to separately perform receiving-sending operations and a related processing operation in the method embodiments.

In addition, the transceiver unit may alternatively be a transceiver circuit (for example, may include a receiving circuit and a sending circuit), and the processing unit may be a processing circuit. In embodiments of this application, the apparatus in FIG. 9 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

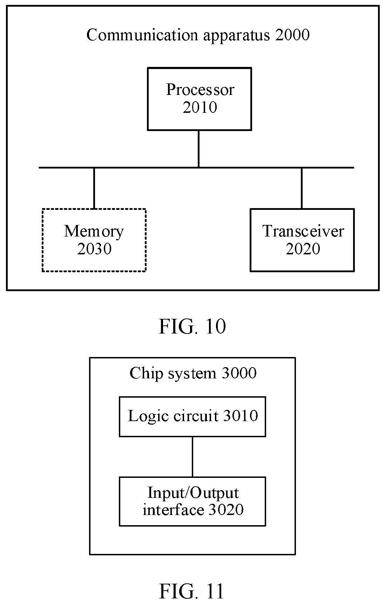

FIG. 10 is a block diagram of a communication apparatus 2000 according to an embodiment of this application. As shown in FIG. 10, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

In a possible implementation, the apparatus 2000 is configured to implement procedures and steps corresponding to the sending device in the foregoing method embodiments.

In another possible implementation, the apparatus 2000 is configured to implement procedures and steps corresponding to the receiving device in the foregoing method embodiments.

It should be understood that, the apparatus 2000 may be specifically the transmit end or the receive end in the foregoing embodiments, or may be a chip or a chip system. Correspondingly, the transceiver 2020 may be a transceiver circuit of the chip. This is not limited herein. Specifically, the apparatus 2000 may be configured to perform steps and/or procedures corresponding to the transmit end or the receive end in the foregoing method embodiments.

Optionally, the memory 2030 includes a read-only memory and a random access memory, and provide instructions and data to the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor, an application specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

FIG. 11 is a block diagram of a chip system 3000 according to an embodiment of this application. As shown in FIG. 11, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled to and connected to a storage unit, and invoke instructions in the storage unit, to enable the chip system 3000 to implement the methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement operations performed by the sending device in the foregoing method embodiments.

For example, the logic circuit 3010 is configured to implement a processing-related operation performed by the sending device in the foregoing method embodiments, for example, a processing-related operation performed by the sending device in the embodiment shown in FIG. 3 or FIG. 7. The input/output interface 3020 is configured to implement a sending and/or receiving-related operation performed by the first terminal device in the foregoing method embodiments, for example, a sending and/or receiving-related operation performed by the sending device in the embodiment shown in FIG. 3 or FIG. 7.

In another solution, the chip system 3000 is configured to implement operations performed by the receiving device in the foregoing method embodiments.

For example, the logic circuit 3010 is configured to implement a processing-related operation performed by the receiving device in the foregoing method embodiments, for example, a processing-related operation performed by the receiving device in the embodiment shown in FIG. 3 or FIG. 7. The input/output interface 3020 is configured to implement a sending and/or receiving-related operation performed by the receiving device in the foregoing method embodiments, for example, a sending and/or receiving-related operation performed by the receiving device in the embodiment shown in FIG. 3 or FIG. 7.

An embodiment of this application further provides a computer-readable storage medium. The computer-readable storage medium stores computer instructions used for implementing the method performed by a terminal device (for example, the sending device or the receiving device) in the foregoing method embodiments.

An embodiment of this application further provides a computer program product, including instructions. When the instructions are executed by a computer, the method performed by a terminal device (for example, the sending device or the receiving device) in the foregoing method embodiments is implemented.

An embodiment of this application further provides a communication system. The communication system includes the sending device or the receiving device in the foregoing embodiments.

For explanations and beneficial effects of related content in any one of the apparatuses provided above, refer to the corresponding method embodiment provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a computer software product. The computer software product is stored in a storage medium, and includes several instructions for instructing a computer device (which may be a personal computer, a server, or an apparatus) to perform all or some of the steps of the methods described in embodiments of this application. The foregoing storage medium includes: any medium that can store program code, for example, a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining K codewords, wherein positions of non-zero coefficients comprised in the K codewords are related, and K is an integer greater than 1;
   generating a first symbol based on the K codewords and K clusters of modulation data, wherein the K codewords one to one correspond to the K clusters of modulation data; and
   sending the first symbol.

2. The method according to claim 1, wherein the K codewords one to one correspond to K codebooks, each of the K codebooks comprises N codewords, quantities of elements comprised in all of the N codewords are the same, and N is an integer greater than 1.

3. The method according to claim 2, wherein the determining the K codewords comprises:
   determining the K codewords from the K codebooks.

4. The method according to claim 3, wherein the determining the K codewords from the K codebooks comprises:

   determining a first codeword index, wherein the first codeword index is one of N codeword indexes, and the N codeword indexes one to one correspond to the N codewords comprised in each codebook; and
   determining the K codewords from the K codebooks based on the first codeword index.

5. The method according to any one of claims 2 to 4, wherein an $i^{th}$ codebook $S_i$ in the K codebooks satisfies:

$$S_i = \left\{ S_i^0, \dots, S_i^{N-1} \right\},$$

wherein $S_i^j$ represents a $j$th codeword in the $i$th codebook, $S_i^j = \left[ S_i^j(0), \dots, S_i^j(L-1) \right]$, $L$ represents a quantity of elements comprised in the $j$th codeword, a value of at least one element in the L elements comprised in $S_i^j$ is 0, $S_i^j(m)$ represents an $m$th element in the $j$th codeword, m = $0, \dots, L - 1$, $i$ and $j$ are integers, $i$ = 0, ... , K - 1, and j = 0, ..., N - 1.

6. The method according to any one of claims 2 to 5, wherein that the positions of the non-zero coefficients comprised in the K codewords are related comprises:

when $L_{nonzero} \leq L$, positions of any two non-zero coefficients in positions of the $L_{nonzero}$ non-zero coefficients are different; or
when $L_{nonzero} > L$, the $L_{nonzero}$ non-zero coefficients comprise $L$ non-zero coefficients, and positions of any two non-zero coefficients in positions of the L non-zero coefficients are different, wherein
$L_{nonzero}$ represents a sum of quantities of elements of the non-zero coefficients comprised in the K codewords that are determined from the K codebooks based on the first codeword index, the first codeword index is one of the N codeword indexes, the N codeword indexes one to one correspond to the N codewords comprised in each codebook, and L represents a quantity of elements comprised in any one of the K codewords.

7. The method according to any one of claims 1 to 6, wherein the first symbol is obtained by combining K first sub-symbols, and the K first sub-symbols are generated based on K clusters of first data.

8. The method according to any one of claims 1 to 7, wherein a length of a k$^{th}$ cluster of modulation data in the K clusters of modulation data is related to a quantity of non-zero coefficients comprised in a codeword corresponding to the k$^{th}$ cluster of modulation data, and k= 0, ..., K - 1.

9. The method according to any one of claims 1 to 8, wherein the K clusters of modulation data are obtained by splitting first modulation data, and the first modulation data is obtained through modulation of bit data.

10. The method according to any one of claims 1 to 9, wherein the generating the first symbol based on the K codewords and the K clusters of modulation data comprises:

extending the K clusters of modulation data based on the K codewords, to obtain the K clusters of first data; and generating the first symbol based on the K clusters of first data.

11. The method according to claim 10, wherein the extending the K clusters of modulation data based on the K codewords, to obtain the K clusters of first data comprises:
extending the k$^{th}$ cluster of modulation data based on a $(j_{cw,1})^{th}$ codeword in a k$^{th}$ codebook, to obtain a k$^{th}$ cluster of first data, wherein $j_{cw,1}$ is the first codeword index, the first codeword index is one of the N codeword indexes, the N codeword indexes one to one correspond to the N codewords comprised in each codebook, k = 0, ... , K - 1, $j_{cw,1} \in$ {0, ... , N - 1}, and N is a quantity of codewords comprised in each of the K codebooks.

12. The method according to any one of claims 2 to 11, wherein a (k')$^{th}$ cluster of modulation data in the K clusters of modulation data corresponds to a (k")$^{th}$ codebook in the K codebooks; and
a codebook index of the (k")$^{th}$ codebook is determined based on an identifier of a sending device, k' = 0, ..., K - 1, and k" = 0, ..., K - 1.

13. The method according to any one of claims 2 to 12, wherein the (k')$^{th}$ cluster of modulation data in the K clusters of modulation data corresponds to a $(j_{cw,1})^{th}$ codeword in the (k")$^{th}$ codebook in the K codebooks, $j_{cw,1}$ is the first codeword index, the first codeword index is one of the N codeword indexes, and the N codeword indexes one to one correspond to the N codewords comprised in each codebook; and
the first codeword index is determined based on the identifier of the sending device, k' = 0, ..., K - 1, k" = 0, ..., K - 1, and $j_{cw,1} \in$ {0, ..., N - 1}.

**14.** The method according to any one of claims 2 to 13, wherein the method further comprises:

determining, based on a pseudo-random sequence, K codebook indexes one to one corresponding to the K clusters of modulation data, wherein the K codebook indexes one to one correspond to the K codebooks; and/or determining, based on the pseudo-random sequence, the first codeword index corresponding to the K clusters of modulation data, wherein the first codeword index is one of the N codeword indexes, and the N codeword indexes one to one correspond to the N codewords comprised in each codebook, wherein initialization of the pseudo-random sequence is determined based on the identifier of the sending device.

**15.** The method according to any one of claims 1 to 14, wherein the K clusters of modulation data one to one correspond to K clusters of frequency positions, and the K clusters of frequency positions are determined based on a bit-map, or the K clusters of frequency positions are determined based on a combinatorial number system.

**16.** The method according to claim 15, wherein each of the K clusters of frequency positions comprises a start frequency position and an end frequency position, and that the K clusters of frequency positions are determined based on the combinatorial number system comprises:

determining a signaling indication value $I_{idx}$; and
determining the K clusters of frequency positions based on the signaling indication value $I_{idx}$ and a first relationship, wherein
the first relationship represents a relationship between the signaling indication value $I_{idx}$ and the start frequency position and the end frequency position of each cluster of frequency positions, and the first relationship satisfies:

$$I_{idx} = \sum_{k=0}^{2K-1} \binom{s_k}{k+1} = \binom{s_{2K-1}}{2K} + \cdots + \binom{s_0}{1},$$

wherein
the $k^{th}$ cluster of frequency positions corresponds to the $k^{th}$ cluster of modulation data in the K clusters of modulation data, $S_{2k}$ represents a start frequency position of the $k^{th}$ cluster of frequency positions, $S_{2k+1}$ - 1 represents an end frequency position of the $k^{th}$ cluster of frequency positions, $s_{2K-1} > s_{2K-2} > \cdots > s_1 > s_0$, and k= 0, ..., K - 1.

**17.** The method according to any one of claims 1 to 16, wherein the first symbol is a single-carrier frequency-division multiple access SC-FDMA symbol.

**18.** A communication method, comprising:

determining K codewords, wherein positions of non-zero coefficients comprised in the K codewords are related, and K is an integer greater than 1;
receiving a first symbol; and
determining K clusters of modulation data based on the first symbol and the K codewords, wherein the K clusters of modulation data one to one correspond to the K codewords.

**19.** The method according to claim 18, wherein the method further comprises:
sending a first codeword index, wherein the first codeword index is one of N codeword indexes, the N codeword indexes one to one correspond to N codewords comprised in each of K codebooks, the K codewords one to one correspond to the K codebooks, and the first codeword index is used to determine the K codewords from the K codebooks.

**20.** The method according to claim 19, wherein the determining the K codewords comprises:
determining the K codewords from the K codebooks.

**21.** The method according to claim 20, wherein the determining the K codewords from the K codebooks comprises:

determining the first codeword index, wherein the first codeword index is one of the N codeword indexes, and the N codeword indexes one to one correspond to the N codewords comprised in each codebook; and
determining the K codewords from the K codebooks based on the first codeword index.

**22.** The method according to any one of claims 18 to 21, wherein the determining the K clusters of modulation data based on the first symbol and the K codewords comprises:

sequentially performing Fourier transform, resource demapping, and inverse Fourier transform on the first symbol, to obtain K clusters of first data; and
de-extending the K clusters of first data based on the K codewords, to obtain the K clusters of modulation data.

**23.** The method according to any one of claims 19 to 22, wherein that the positions of the non-zero coefficients comprised in the K codewords are related comprises:

when $L_{nonzero} \leq L$, positions of any two non-zero coefficients in positions of the $L_{nonzero}$ non-zero coefficients are different; or
when $L_{nonzero} > L$, the $L_{nonzero}$ non-zero coefficients comprise L non-zero coefficients, and positions of any two non-zero coefficients in positions of the L non-zero coefficients are different, wherein
$L_{nonzero}$ represents a sum of quantities of elements of the non-zero coefficients comprised in the K codewords that are determined from the K codebooks based on the first codeword index, the first codeword index is one of the N codeword indexes, the N codeword indexes one to one correspond to the N codewords comprised in each codebook, and L represents a quantity of elements comprised in any one of the K codewords.

**24.** The method according to any one of claims 18 to 23, wherein a length of a $k^{th}$ cluster of modulation data in the K clusters of modulation data is related to a quantity of non-zero coefficients comprised in a codeword corresponding to the $k^{th}$ cluster of modulation data, and k= 0, ..., K - 1.

**25.** The method according to any one of claims 19 to 24, wherein the method further comprises:

determining, based on a pseudo-random sequence, K codebook indexes one to one corresponding to the K clusters of modulation data, wherein the K codebook indexes one to one correspond to the K codebooks; and/or
determining, based on the pseudo-random sequence, the first codeword index corresponding to the K clusters of modulation data, wherein the first codeword index is one of the N codeword indexes, and the N codeword indexes one to one correspond to the N codewords comprised in each of the K codebooks, wherein
initialization of the pseudo-random sequence is determined based on an identifier of a sending device.

**26.** The method according to any one of claims 18 to 25, wherein the K clusters of modulation data one to one correspond to K clusters of frequency positions, and the K clusters of frequency positions are determined based on a bit-map, or the K clusters of frequency positions are determined based on a combinatorial number system.

**27.** The method according to claim 26, wherein each of the K clusters of frequency positions comprises a start frequency position and an end frequency position, and that the K clusters of frequency positions are determined based on the combinatorial number system comprises:

determining a signaling indication value $l_{idx}$; and
determining the K clusters of frequency positions based on the signaling indication value $l_{idx}$ and a first relationship, wherein
the first relationship represents a relationship between the signaling indication value $l_{idx}$ and the start frequency position and the end frequency position of each cluster of frequency positions, and the first relationship satisfies:

$$l_{idx} = \sum_{k=0}^{2K-1} \binom{s_k}{k+1} = \binom{s_{2K-1}}{2K} + \cdots + \binom{s_0}{1},$$

wherein
the $k^{th}$ cluster of frequency positions corresponds to the $k^{th}$ cluster of modulation data in the K clusters of modulation data, $S_{2k}$ represents a start frequency position of the $k^{th}$ cluster of frequency positions, $S_{2k+1}$ - 1 represents an end frequency position of the $k^{th}$ cluster of frequency positions, $s_{2K-1} > s_{2K-2} > \cdots > s_1 > s_0$, and k= 0, ... , K - 1.

**28.** The method according to any one of claims 18 to 27, wherein the first symbol is a single-carrier frequency-division multiple access SC-FDMA symbol.

29. A communication apparatus, comprising a module or a unit configured to perform the method according to any one of claims 1 to 17, or a module or a unit configured to perform the method according to any one of claims 18 to 28.

30. A communication apparatus, wherein the communication apparatus comprises a processor, the processor is coupled to a memory, the memory stores instructions, and when the instructions are run by the processor, the communication apparatus is enabled to perform the method according to any one of claims 1 to 17, or the communication apparatus is enabled to perform the method according to any one of claims 18 to 28.

31. A computer-readable storage medium, wherein the computer-readable storage medium is configured to store a computer program, and when the computer program is run on a computer, the computer is enabled to perform the method according to any one of claims 1 to 17, or the communication apparatus is enabled to perform the method according to any one of claims 18 to 28.

100

101

102

103

104

105

106

FIG. 1

One slot

14 symbols

RE

One
RB

FIG. 2

300

```
┌─────────────────┐                      ┌──────────────────┐
│ Sending device  │                      │ Receiving device │
└─────────────────┘                      └──────────────────┘
         │                                         │
┌─────────────────────────┐                        │
│ S310: Determine K       │                        │
│ codewords               │                        │
└─────────────────────────┘                        │
         │                                         │
┌─────────────────────────┐                        │
│ S320: Generate a first  │                        │
│ symbol based on the K   │                        │
│ codewords and K         │                        │
│ clusters of modulation  │                        │
│ data                    │                        │
└─────────────────────────┘                        │
         │       S330: First symbol                │
         │────────────────────────────────────────▶│
         │                                         │
         │               ┌──────────────────────────────┐
         │               │ S340: Determine the K        │
         │               │ codewords                    │
         │               └──────────────────────────────┘
         │                                         │
         │               ┌──────────────────────────────┐
         │               │ S350: Determine the K        │
         │               │ clusters of modulation data  │
         │               │ based on the first symbol    │
         │               │ and the K codewords          │
         │               └──────────────────────────────┘
         │                                         │
```

FIG. 3

Codebook 0

Codebook 1

Codebook 2

Codeword 0            Codeword 1            Codeword N−1

FIG. 4

Codebook 0  Codebook 1  Codebook 2

Codeword 0   Codeword 1   Codeword P   Codeword P+1   Codeword N−1

## FIG. 5

Codebook 0  Codebook 1  Codebook 2

Codeword 0   Codeword 1   Codeword P   Codeword P+1   Codeword N−1

## FIG. 6

700

S710
Generate first modulation data through modulation of bit data

S720
Split the first modulation data to obtain K clusters of modulation data

S730
Extend the K clusters of modulation data based on K codewords, to determine K clusters of first data

S740
Perform Fourier transform on each of the K clusters of first data, to obtain K clusters of frequency data

S750
Perform resource mapping on the K clusters of frequency data and then perform inverse Fourier transform, to generate an SC-FDMA symbol

## FIG. 7

800

```
┌──────────┐                                    ┌──────────────┐
│ Terminal │                                    │Network device│
│  device  │                                    └──────────────┘
└──────────┘                                            │
     │                                                  │
     │                              ┌───────────────────────────────────┐
     │                              │ S810: Determine configuration     │
     │                              │          information              │
     │                              └───────────────────────────────────┘
     │                                                  │
     │          S820: Configuration information         │
     │◄─────────────────────────────────────────────────│
     │                                                  │
┌───────────────────────────────────┐                   │
│ S830: Determine K codebooks        │                   │
│ based on the configuration         │                   │
│          information               │                   │
└───────────────────────────────────┘                   │
     │                                                  │
```

FIG. 8

```
┌─────────────────────────────────┐
│ Communication apparatus         │
│           1000                  │
│   ┌─────────────────────────┐   │
│   │  Transceiver unit       │   │
│   │       1010              │   │
│   └─────────────────────────┘   │
│             │                   │
│   ┌─────────────────────────┐   │
│   │  Processing unit        │   │
│   │       1020              │   │
│   └─────────────────────────┘   │
└─────────────────────────────────┘
```

FIG. 9

Communication apparatus 2000

Processor
2010

Memory
2030

Transceiver
2020

FIG. 10

Chip system 3000

Logic circuit 3010

Input/Output
interface 3020

FIG. 11

**EP 4 750 009 A1**

## INTERNATIONAL SEARCH REPORT

| International application No. |
|---|
| **PCT/CN2024/074456** |

| | | |
|---|---|---|
| **A.** | **CLASSIFICATION OF SUBJECT MATTER** | |

H04L27/12(2006.01)i; H04L27/26(2006.01)i; H04L1/00(2006.01)i

According to International Patent Classification (IPC) or to both national classification and IPC

| | | |
|---|---|---|
| **B.** | **FIELDS SEARCHED** | |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI: 码字, 码本, 序列, 图样, 图案, 矩阵, 非零, 稀疏, 不同, 不相同, 相关, 互补, 峰均比, 扩展, codeword, codebook, sequence, pattern, matrix, nonzero, non-zero, sparse+, SCMA, different+, correlat+, complement +, PAPR, expand+

| | | |
|---|---|---|
| **C.** | **DOCUMENTS CONSIDERED TO BE RELEVANT** | |

| Category* | Citation of document, with indication, where appropriate, of the relevant passages | Relevant to claim No. |
|---|---|---|
| X | CN 109962751 A (ZTE CORP.) 02 July 2019 (2019-07-02) <br> description, paragraphs 136-178, 304-319, and 358, and figures 6 and 23 | 1-15, 17-26, 28-31 |
| A | CN 107295673 A (SONY CORP.) 24 October 2017 (2017-10-24) <br> entire document | 1-31 |
| A | US 2016050039 A1 (HUAWEI TECHNOLOGIES CO., LTD.) 18 February 2016 <br> (2016-02-18) <br> entire document | 1-31 |
| A | US 2018048349 A1 (QUALCOMM INC.) 15 February 2018 (2018-02-15) <br> entire document | 1-31 |
| A | CN 115699977 A (GUANGDONG OPPO MOBILE COMMUNICATIONS CO., LTD.) 03 <br> February 2023 (2023-02-03) <br> entire document | 1-31 |
| A | CN 113412652 A (TELEFONAKTIEBOLAGET LM ERICSSON (PUBL)) 17 September <br> 2021 (2021-09-17) <br> entire document | 1-31 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 February 2024** | **28 March 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

43

## INTERNATIONAL SEARCH REPORT
### Information on patent family members

International application No.

**PCT/CN2024/074456**

| Patent document cited in search report | | | Publication date (day/month/year) | Patent family member(s) | | | Publication date (day/month/year) |
|---|---|---|---|---|---|---|---|
| CN | 109962751 | A | 02 July 2019 | WO | 2019128678 | A1 | 04 July 2019 |
| | | | | CN | 109962751 | B | 01 March 2022 |
| CN | 107295673 | A | 24 October 2017 | EP | 3435718 | A1 | 30 January 2019 |
| | | | | EP | 3435718 | A4 | 03 April 2019 |
| | | | | WO | 2017166538 | A1 | 05 October 2017 |
| | | | | US | 2020153570 | A1 | 14 May 2020 |
| | | | | US | 10887060 | B2 | 05 January 2021 |
| | | | | CN | 108886792 | A | 23 November 2018 |
| | | | | CN | 108886792 | B | 18 August 2023 |
| US | 2016050039 | A1 | 18 February 2016 | CA | 2958746 | A1 | 18 February 2016 |
| | | | | CA | 2958746 | C | 05 February 2019 |
| | | | | JP | 2017530604 | A | 12 October 2017 |
| | | | | JP | 6536672 | B2 | 03 July 2019 |
| | | | | US | 10523383 | B2 | 31 December 2019 |
| | | | | WO | 2016023495 | A1 | 18 February 2016 |
| | | | | EP | 3172857 | A1 | 31 May 2017 |
| | | | | EP | 3172857 | A4 | 09 August 2017 |
| | | | | EP | 3172857 | B1 | 26 January 2022 |
| | | | | BR | 112017002918 | A2 | 05 December 2017 |
| | | | | KR | 20170041896 | A | 17 April 2017 |
| | | | | KR | 101994951 | B1 | 01 July 2019 |
| | | | | SG | 11201701203 | A1 | 30 March 2017 |
| | | | | CN | 106576037 | A | 19 April 2017 |
| | | | | CN | 106576037 | B | 21 April 2020 |
| | | | | IN | 201747005938 | A | 07 April 2017 |
| | | | | IN | 201747006786 | A | 07 April 2017 |
| | | | | IN | 455214 | B | 06 October 2023 |
| | | | | VN | 52000 | A | 25 April 2017 |
| | | | | ID | 201713613 | A | 15 December 2017 |
| | | | | VN | 10030735 | B | 25 January 2022 |
| US | 2018048349 | A1 | 15 February 2018 | US | 10263660 | B2 | 16 April 2019 |
| | | | | BR | 112019002236 | A2 | 14 May 2019 |
| | | | | AU | 2017311567 | A1 | 31 January 2019 |
| | | | | AU | 2017311567 | B2 | 23 September 2021 |
| | | | | EP | 3497897 | A1 | 19 June 2019 |
| | | | | EP | 3497897 | B1 | 08 June 2022 |
| | | | | WO | 2018031819 | A1 | 15 February 2018 |
| | | | | CN | 109565478 | A | 02 April 2019 |
| | | | | CN | 109565478 | B | 26 November 2021 |
| | | | | IN | 201927000539 | A | 13 December 2019 |
| | | | | ID | 201901596 | A | 01 March 2019 |
| CN | 115699977 | A | 03 February 2023 | WO | 2021237721 | A1 | 02 December 2021 |
| | | | | EP | 4156833 | A1 | 29 March 2023 |
| | | | | EP | 4156833 | A4 | 02 August 2023 |
| | | | | US | 2023113672 | A1 | 13 April 2023 |
| CN | 113412652 | A | 17 September 2021 | WO | 2020167233 | A1 | 20 August 2020 |
| | | | | EP | 3925323 | A1 | 22 December 2021 |
| | | | | MX | 2021008836 | A | 08 September 2021 |
| | | | | US | 2022132446 | A1 | 28 April 2022 |

Form PCT/ISA/210 (patent family annex) (July 2022)

**EP 4 750 009 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2023119505